# EUROPÄISCHE PATENTSCHRIFT

(11) **EP 3 507 152 B1**
(45) Veröffentlichungstag und Bekanntmachung des Hinweises auf die Patenterteilung: **15.04.2020**
(21) Anmeldenummer: 17742371.2
(22) Anmeldetag: 17.07.2017
(51) Int. Cl.: B60T 13/68

(54) **VERFAHREN ZUM ELEKTRONISCHEN STEUERN EINES PNEUMATISCHEN BREMSSYSTEMS IN EINEM FAHRZEUG, SOWIE ELEKTRONISCH STEUERBARES PNEUMATISCHES BREMSSYSTEM**
METHOD FOR ELECTRONICALLY CONTROLLING A PNEUMATIC BRAKING SYSTEM IN A VEHICLE, AND ELECTRONICALLY CONTROLLABLE PNEUMATIC BRAKING SYSTEM
PROCÉDÉ DE COMMANDE ÉLECTRONIQUE D'UN SYSTÈME DE FREINAGE PNEUMATIQUE DANS UN VÉHICULE AINSI QUE SYSTÈME DE FREINAGE PNEUMATIQUE À COMMANDE ÉLECTRONIQUE

(30) Priorität: 31.08.2016 DE 102016010463
(43) Veröffentlichungstag der Anmeldung: 10.07.2019
(73) Patentinhaber: WABCO Europe BVBA, 1170 Brussels (BE)
(72) Erfinder: WULF, Oliver, 31535 Neustadt (DE)
(74) Vertreter: Rabe, Dirk-Heinrich
(86) Internationale Anmeldenummer: PCT/EP2017/000859
(87) Internationale Veröffentlichungsnummer: WO 2018/041384

(56) Entgegenhaltungen:
- DE-A1-102007 023 345
- DE-A1-102014 017 683

## Beschreibung

Die Erfindung betrifft ein Verfahren zum elektronischen Steuern eines pneumatischen Bremssystems in einem Fahrzeug, insbesondere Nutzfahrzeug, sowie elektronisch steuerbares pneumatisches Bremssystem.

In Fahrzeugen, insbesondere Nutzfahrzeugen, mit einem pneumatischen Bremssystem können zum Aussteuern von Bremsdrücken von einer Steuereinrichtung (ECU) elektronisch den Fahrzeugachsen zugeordnete Achsmodulatoren angesteuert werden. Die elektronische Ansteuerung findet dabei entweder in Abhängigkeit eines durch ein Fußbremsventil vorgegebenen Fahrerwunsches oder aber in Abhängigkeit einer automatisiert vorgegebenen Fahrzeug-Soll-Verzögerung statt. Die Achsmodulatoren erzeugen dann pneumatisch einen entsprechenden Betriebsbrems-Bremsdruck, der an Bremszylinder der Betriebsbremsen des Bremssystems ausgesteuert werden.

Alternativ können die Achsmodulatoren auch pneumatisch angesteuert werden, indem vom Fußbremsventil ein dem Fahrerwunsch entsprechender Betriebsbrems-Steuerdruck an die Achsmodulatoren vorgegeben wird, in Abhängigkeit dessen der jeweilige Achsmodulator den entsprechenden Betriebsbrems-Bremsdruck für die Betriebsbremsen durch eine Luftmengenverstärkung erzeugt. In beiden Varianten ist eine ABS-Funktionalität integriert, so dass ein Blockieren der Räder beim Bremsen verhindert werden kann.

Um in derartigen Bremssystemen auch eine automatisiert ansteuerbare Rückfallebene auszubilden, die in einer Notsituation automatisiert eingreifen kann, wenn der Fahrer beispielsweise unaufmerksam oder nicht am Platz ist, sind mehrere Lösungen bekannt. Derartige Lösungen berücksichtigen allerdings nicht die Erhaltung der Fahrstabilität während einer automatisiert gesteuerten redundanten Bremsung, die insbesondere durch einen Bremsschlupffall beeinträchtigt werden kann. Da in einem elektrischen Fehlerfall eine Ansteuerung von ABS-Steuerventilen nicht zuverlässig erfolgen kann und auch von den Achsmodulatoren nicht auf einen Bremsschlupffall reagiert werden kann, kann die Fahrstabilität bei einer redundanten Bremsung nicht in allen Fällen erhalten werden.

Die DE 10 2013 015 949 A1 beschreibt ein Bremssystem zur Kurvenunterstützung, wobei vorgesehen ist, mit einem elektronisch gesteuerten Mehrwegeventil einen Betriebsbrems-Bremsdruck an Betriebsbremsen des Bremssystems auszusteuern, wobei ein Betriebsbrems-Bremsdruck auch dann ausgesteuert wird, wenn von einem Fußbremsventil als Bremswertgeber keine Bremsanforderung vorliegt. Das Mehrwegeventil und das Fußbremsventil sind über ein Wechselventil (Select-High-Ventil) auf ein Relaisventil geschaltet, das den Betriebsbrems-Bremsdruck an die Betriebsbremsen aussteuert. Das Wechselventil gibt hierbei lediglich den höheren der beiden Drücke vom Fußbremsventil oder dem Mehrwegeventil an das Relaisventil weiter, so dass die elektronische Bremsanforderung des Mehrwegeventils durch das Fußbremsventil übersteuert werden kann.

Die DE 10 2010 050 578 A1 oder die DE 10 2010 050 580 A1 zeigen eine Bremsanlage, bei der über ein Fußbremsventil bzw. eine Bremspedaleinrichtung eine Bremsanforderung vorgegeben wird. Diese wird in einer Steuereinrichtung in ein elektronisches Signal umgewandelt und mit dem elektronischen Signal ein Achsmodulator angesteuert, das den Betriebsbrems-Bremsdruck an die Betriebsbremsen aussteuert. Fällt die Elektronik aus, wird im Redundanzfall der Achsmodulator pneumatisch über Druckluftleitungen mit einem Betriebsbrems-Steuerdruck angesteuert und darüber ein Betriebsbrems-Bremsdruck an die Betriebsbremsen ausgegeben. Der Achsmodulator weist dazu drei Magnetventile sowie ein Relaisventil auf. Je nach Stellung der Magnetventile wird als Betriebsbrems-Steuerdruck der vom Fußbremsventil vorgegebene Betätigungsdruck, der Vorratsdruck aus dem Druckmittelvorrat oder der Atmosphärendruck aus einer Entlüftung verwendet. Dadurch kann der Betriebsbrems-Bremsdruck je nach elektronisch vorgegebener Schaltstellung der drei Magnetventile in Abhängigkeit einer manuellen oder elektrischen Vorgabe erhöht, gehalten oder reduziert werden.

Die WO 2016/045652 A1 zeigt eine elektropneumatische Betriebsbremseinrichtung mit einem Fußbremsventil, dessen Bremspedalstellung sensiert werden kann und dessen ausgegebener Betätigungsdruck zum Ansteuern der Achsmodulatoren unabhängig von einer Bremspedalstellung modifiziert werden kann. Dazu ist eine Magnetventileinrichtung mit beispielsweise zwei 3/2-Wegeventilen vorgesehen, die je nach elektronischer Anforderung einen Fußbrems-Eingangsdruck in das Fußbremsventil einleitet. Über ein zusätzliches Halteventil wird der wirkende Fußbrems-Eingangsdruck gehalten. Durch den wirkenden Fußbrems-Eingangsdruck wird im Fußbremsventil pneumatisch ein Steuerkolben mechanisch bewegt, so dass vom Fußbremsventil ein der pneumatischen Betätigung entsprechender Betätigungsdruck ausgesteuert wird, der als Betriebsbrems-Steuerdruck an die Achsmodulatoren weitergeleitet wird. Dadurch kann im Redundanzfall, d.h. wenn die elektrische Ansteuerung der Betriebsbremsen fehlschlägt, und wenn keine manuelle Betätigung durch den Fahrer vorliegt über das Fußbremsventil und dessen pneumatischen Kanal eine Bremsung bewirkt werden. Somit liegt quasi eine elektronisch gesteuerte, mechano-pneumatische Betätigung des Fußbremsventils vor.

Eine weitere mechanische Betätigung des Fußbremsventils ist beispielsweise in US 7 520 572 B2 und EP 1 730 006 B1 gezeigt. Hierbei ist jeweils ein Verfahren gezeigt, bei dem das Fußbremsventil zusätzlich zum Bremspedal von einer elektronischen Steuereinrichtung betätigt werden kann. Demnach ist ein elektronisches Bremssystem vorgesehen, dessen Betriebsbremsen durch das Fußbremsventil und über ein zusätzliches Relaisventil angesteuert werden. Die Bremsanforderung kann zum einen über das Bremspedal auf das Fußbremsventil vorgegeben werden oder aber unabhängig davon über einen Bremsventilaktuator, der zwischen dem Bremspedal und dem Fußbremsventil angeordnet ist. Der Bremsventilaktuator wird durch die elektronische Steuereinrichtung gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Fußbremsventil betätigt wird.

In DE 10 2013 015 971 A1 ist eine Bremsvorrichtung beschrieben, bei der das Fußbremsventil über ein Wegeventil mit den Betriebsbremsen pneumatisch verbunden ist. In einer ersten Schaltstellung des Wegeventils wird der vom Fußbremsventil durch manuelle Betätigung erzeugte Betätigungsdruck direkt an die Betriebsbremsen ausgegeben. In einer zweiten Schaltstellung wird zwischen das Fußbremsventil und die Betriebsbremsen ein Rückschlagventil geschaltet. Das Rückschlagventil ermöglicht ein vom Fußbremsventil bewirktes Druckerhöhen an den Betriebsbremsen, verhindert allerdings ein Druckreduzieren bzw. Entlüften der Betriebsbremsen und sorgt somit für ein Halten des aufgebauten Betriebsbrems-Bremsdruckes.

In EP 2 532 559 B1 ist ein Bremssystem beschrieben, das zwei als 2/2-Wegeventile ausgeführte Vorsteuerventile sowie zumindest ein Select-High-Ventil aufweist. Die Vorsteuerventile können in Abhängigkeit eines gemessenen Betriebsbrems-Steuerdruckes elektronisch derartig umgeschaltet werden, dass ein vom Druckmittelvorrat einströmendes Druckmittel mit einem Vorratsdruck oder eine Entlüftung mit dem Select-High-Ventil kurzgeschlossen werden. Dadurch kann ein elektrisch gesteuertes Druckerhöhen oder Druckreduzieren des Betriebsbrems-Bremsdruckes erreicht werden. Durch eine entsprechende Schaltstellung der Vorsteuerventile kann der Betriebsbrems-Steuerdruck auch gehalten werden. Ergänzend wird auch der vom Fahrer durch Betätigung des Fußbremsventils vorgegebene Betätigungsdruck an das Select-High-Ventil geleitet. Das Select-High-Ventil steuert dann den höheren der beiden anliegenden Drücke an die Betriebsbremsen aus, d.h. entweder den von dem entsprechenden Vorsteuerventil bereitgestellten Vorrats- bzw. Fußbrems-Eingangsdruck oder den Betätigungsdruck. Somit kann mit zwei Vorsteuerventilen und einem Select-High-Ventil elektronisch gesteuert ein Druckerhöhen, ein Druckhalten oder ein Druckreduzieren erreicht werden, wenn keine manuelle Fahrerbetätigung vorliegt.

EP 2 055 541 B1 beschreibt ein Fahrerassistenzsystem mit einem bistabilen und einem monostabilen Vorsteuerventil. Über das bistabile Vorsteuerventil kann ein Federspeicher einer Feststellbremse belüftet oder entlüftet werden, indem bei entsprechender Schaltstellung des bistabilen Vorsteuerventils entweder der Druckmittelvorrat zum Lösen des Federspeichers oder eine Entlüftung zum Zuspannen des Federspeichers mit einem pneumatischen Steuereingang eines Achsmodulators verbunden werden. Zwischen dem bistabilen Vorsteuerventil und dem Achsmodulator ist das monostabile Vorsteuerventil angeordnet, das in einer Schaltstellung den vom bistabilen Vorsteuerventil ausgegebenen Parkbrems-Steuerdruck an den Achsmodulator durchlässt und sonst eine Strömungsverbindung verhindert. D.h. in der zweiten Schaltstellung des monostabilen Vorsteuerventils wird der vorherrschende Parkbrems-Steuerdruck am Achsmodulator gehalten.

DE 10 2011 115 128 A1 beschreibt eine ACC-Regelung, die bei einer Fahrt auf einem Gefälle die Betätigung der Radbremsen verringert, indem von einer Betriebsbrems-Steuereinrichtung statt einem kontinuierlichen Vorsteuersignal auf ein alternierendes Vorsteuersignal gewechselt wird. Dadurch wird der Betriebsbrems-Steuerdruck gegenüber einer kontinuierlichen Ansteuerung verringert, da sich ein geringerer mittlerer Steuerdruck ergibt, der zu einer verringerten Bremswirkung führt.

DE 10 2014 017 683 A1 zeigt ein Bremssystem mit einem Vorsteuerventil, das von einer Betriebsbrems-Steuereinrichtung angesteuert wird. Die Betriebsbrems-Steuereinrichtung erzeugt hierbei ein Vorsteuersignal, mit dem das Vorsteuerventil zwischen einer ersten Schaltstellung und einer zweiten Schaltstellung hin und hergeschalte werden kann. Dadurch wird ein mittleres Druckniveau eingestellt, wobei das mittlere Druckniveau derartig eingestellt wird, dass sich eine geringe Restwelligkeit ergibt, so dass der Achsmodulator mit einem möglichst analogen Steuerdruck angesteuert werden kann und sich eine gleichmäßige Bremsung ergibt. Dem Achsmodulator an den einzelnen Rädern nachgeschaltet sind ABS-Steuerventile, die bei Auftreten eines Bremsschlupffalls ein Blockieren der Räder verhindern. Bei einem Ausfall oder Defekt der elektrischen Ansteuerung, kann auf eine pneumatische Rückfallebene gewechselt werden, bei der eine rein pneumatische Ansteuerung über die Achsmodulatoren stattfindet, wobei bei einem Ausfall der elektrischen Ansteuerung der ABS-Steuerventile nicht mehr auf einen Bremsschlupffall reagiert werden kann.

Es ist Aufgabe der Erfindung, ein Verfahren zum elektronischen Steuern eines pneumatischen Bremssystems in einem Nutzfahrzeug anzugeben, mit dem mit wenig Aufwand eine sichere und zuverlässige elektronisch gesteuerte redundante Bremsung durchgeführt werden kann. Weiterhin ist Aufgabe der Erfindung, ein elektronisch steuerbares pneumatisches Bremssystem in einem Nutzfahrzeug anzugeben.

Diese Aufgabe wird durch ein Verfahren zum elektronischen Steuern eines pneumatischen Bremssystems nach Anspruch 1 sowie einem elektronisch steuerbaren pneumatischen Bremssystem nach Anspruch 17 gelöst.
Bevorzugte Weiterbildungen sind in den Unteransprüchen angegeben.

Erfindungsgemäß ist demnach vorgesehen, nach dem Feststellen, ob ein Ausfall oder ein Defekt bei der elektronischen Ansteuerung von Radbremsen in einem Fahrzeug, insbesondere Nutzfahrzeug, ein Redundanz-Signal an ein Vorsteuerventil auszugeben, wobei das Vorsteuerventil daraufhin einen Vorsteuerdruck ausgibt, aufgrund dessen mit den Radbremsen eine Stotterbremsung bewirkt werden kann. In Abhängigkeit des Redundanz-Signals wird das Vorsteuerventil dazu zwischen zwei Schaltstellungen derartig hin und her geschaltet, dass der Vorsteuerdruck zwischen einem niedrigen Druckniveau und einem hohen Druckniveau hin und herschwingt, wobei in Abhängigkeit des Vorsteuerdruckes ein somit ebenfalls schwingender Betriebsbrems-Steuerdruck an die Radbremsen ausgesteuert wird.

Eine Puls-Zeit, in der durch die Schaltstellung des Vorsteuerventils das hohe Druckniveau eingestellt wird, und eine Pausen-Zeit, in der durch die Schaltstellung des Vorsteuerventils das niedrige Druckniveau eingestellt wird, sind erfindungsgemäß derartig gewählt, dass der an die Radbremsen ausgesteuerte Betriebsbrems-Bremsdruck zumindest für eine Grenz-Zeit wiederkehrend unter einen Grenz-Druck fällt. Der Grenz-Druck sowie die Grenz-Zeit sind hierbei derartig gewählt, dass ausschließlich durch diese Druckverringerung ein Wiederanlaufen eines möglicherweise blockierenden Rades gewährleistet werden kann.

Vorteilhafterweise wird also erkannt, dass zum Bewirken einer Stotterbremsung an den vorsteuerdruckgesteuerten Radbremsen ein Vorsteuerdruck einzustellen ist, der bewirkt, dass die Räder für einen kurzen Moment aus einer blockierenden Stellung wieder in eine drehende Stellung übergehen, d.h. ein Wiederanlaufen eines blockierenden Rades sichergestellt ist. Gleichzeitig ist dafür zu sorgen, dass das Fahrzeug mit einer vorgegebenen Fahrzeug-Soll-Verzögerung abgebremst wird. Beides kann erfindungsgemäß ausschließlich durch die Einstellung des Vorsteuerdruckes gewährleistet werden, so dass im Redundanzfall, d.h. bei einem Ausfall oder einem Defekt der elektrischen Ansteuerung der Radbremsen, in dem ggf. auch eine elektrische Ansteuerung von ABS-Steuerventilen nicht möglich ist, eine Abbremsung mit einer alternativen, die Fahrstabilität ebenfalls erhaltenden Maßnahme eingeleitet werden kann. Die Stotterbremsung kann somit gleichzeitig auch eine ausgefallene elektrische Bremsschlupfregelung ersetzen. D.h. die redundante Maßnahme zum Erhalten oder Erhöhen der Fahrstabilität funktioniert vorteilhafterweise auch dann, wenn die ABS-Steuerventile oder andere elektrische Ventile im Fahrzeug nicht funktionieren.

Vorteilhafterweise wird somit eine einfache Möglichkeit geschaffen, ohne viel Aufwand die Fahrstabilität im Redundanzfall dennoch zu erhalten. Dazu sind lediglich das Vorsteuerventil, beispielsweise ein 3/2-Wegeventil, sowie eine redundante elektrische Ansteuerung, eine Redundanz-Steuereinrichtung, des Vorsteuerventils nötig. Erfindungsgemäß wird dabei erkannt, dass es im Redundanzfall lediglich darauf ankommt, das Fahrzeug sicher in einen sicheren Zustand zu überführen, d.h. entweder in den Stillstand oder auf eine geeignete Geschwindigkeit, mit der das Fahrzeug an den Randstreifen oder einen Werkstatt gefahren werden kann. Weitere Komponenten, die in einem derartigen Fehlerfall bzw. Redundanzfall für ein schnelles und sicheres Abbremsen des Fahrzeuges gerade nicht nötig sind, insbesondere Komponenten, die für eine fein abgestufte Bremsung oder ein Feststellen einer Bremswirkung oder eine ruckarme Bremsung oder die für einen geringen Verschleiß, einen geringen Luftverbrauch oder eine geringe Geräuschentwicklung sorgen, können entfallen. Denn der Redundanzfall stellt lediglich einen Ausnahmefall dar, der nur sehr selten während der Lebensdauer des Fahrzeuges auftritt, so dass es bei den für den Redundanzfall relevanten Komponenten beispielsweise nicht auf die Geräuschentwicklung oder einen verschleißarmen Betrieb ankommt.

Somit wird im Unterschied zum Stand der Technik kein quasi konstanter vom Vorsteuerventil ausgesteuerter mittlerer Vorsteuerdruck eingestellt, durch den eine bestimmte Bremswirkung mit einer nur geringen Restwelligkeit erreicht werden soll, um das Fahrzeug im Normalbetrieb komfortabel abzubremsen. Vielmehr wird erfindungsgemäß die Welligkeit des Vorsteuerdruckes bzw. des Betriebsbrems-Bremsdruckes im Redundanzfall gerade ausgenutzt, um die Fahrstabilität zu erhalten bzw. zu erhöhen, indem automatisch an allen Rädern der Betriebsbrems-Bremsdruck wiederkehrend so stark reduziert wird, dass ein zum Blockieren neigendes Rad für eine kurze Zeit die Möglichkeit bekommt, wieder anzulaufen.

Das niedrige Druckniveau in der ersten Schaltstellung wird hierbei beispielsweise durch einen von einem Fußbremsventil ausgesteuerten Betätigungsdruck oder durch einen Atmosphärendruck vorgegeben, indem entweder das Fußbremsventil oder eine Vorsteuer-Entlüftung mit einem ersten Vorsteuer-Eingang des Vorsteuerventils verbunden werden. Ein zweiter Vorsteuer-Eingang, über den in der zweiten Schaltstellung das hohe Druckniveau vorgegeben wird, ist beispielsweise mit einem Druckmittelvorrat eines Bremskreises des Fahrzeuges verbunden. In den jeweiligen Schaltstellungen wird dann zwischen dem ersten bzw. dem zweiten Vorsteuer-Eingang gewechselt, so dass sich der entsprechende Vorsteuerdruck ergibt, der zwischen dem hohen und dem niedrigen Druckniveau schwingt.

Zum Einstellen der geeigneten Puls-Zeiten und Pausen-Zeiten ist auf der Redundanz-Steuereinrichtung ein Vorsteuer-Modell gespeichert, beispielsweise eine entsprechende Software mit gespeicherten Parametern des Bremssystems. Das Vorsteuer-Modell berechnet damit zunächst aus einer Fahrzeug-Soll-Verzögerung, die im Redundanzfall automatisiert von der Redundanz-Steuereinrichtung vorgegeben wird und aufgrund derer das Fahrzeug in einen sicheren Zustand, beispielsweise den Stillstand oder eine bestimmte Geschwindigkeit abgebremst wird, einen vom Vorsteuerventil auszusteuernden Vorsteuerdruck, mit dem diese Fahrzeug-Soll-Verzögerung zu erreichen ist.

Unter Berücksichtigung von einzelnen Fahrzeug-Parametern, beispielsweise einer Fahrzeugmasse, einem Anhänger-Zustand und einer Ventilcharakteristik, sowie dem niedrigen Druckniveau und dem hohen Druckniveau wird anschließend aus dem Vorsteuerdruck die Puls-Zeit und die Pausen-Zeit berechnet, mit denen das Vorsteuerventil anzusteuern ist, um die Fahrzeug-Verzögerung zu erreichen. Zusätzlich wird berücksichtigt, dass der Vorsteuerdruck derartig eingestellt wird, dass der Betriebsbrems-Bremsdruck zumindest für die Grenz-Zeit wiederkehrend unter den Grenz-Druck sinkt, um die Bedingung an ein Wiederanlaufen der Räder bei einem minimalen Reibwert zu erfüllen.

Die Grenz-Zeit kann hierbei beispielsweise auf 0,25s gesetzt werden und der Grenz-Druck auf 1bar. Unter diesen Voraussetzungen ergeben sich mit dem Vorsteuer-Modell beispielsweise Puls-Zeiten von 0,1s oder 0,3s und Pausen-Zeiten von 0,2s oder 0,45s, mit denen eine derartige Stotterbremsung erreicht werden kann, um die Fahrstabilität zu erhalten.

Somit können vorteilhafterweise durch eine einfache Software-Umsetzung über das Vorsteuer-Modell die Pausen-Zeit und die Puls-Zeit derartig eingestellt werden, dass mit dem daraus folgenden Vorsteuerdruck die Fahrzeug-Soll-Verzögerung unter Berücksichtigung der Grenz-Zeit sowie des Grenz-Druckes erreicht werden kann. Dazu sind lediglich einfache Umrechnungen nötig.

Der Vorsteuerdruck wird entweder als Betriebsbrems-Steuerdruck an Achsmodulatoren des Bremssystems ausgesteuert, wobei die Achsmodulatoren den Vorsteuerdruck luftmengenverstärken und als Betriebsbrems-Bremsdruck an die Radbremsen ausgeben. Alternativ kann das Vorsteuerventil auch hinter den Achsmodulatoren angeordnet sein, so dass der Vorsteuerdruck als Betriebsbrems-Bremsdruck direkt an die Radbremsen ausgesteuert wird. In beiden Fällen wird von den Radbremsen eine Bremswirkung in Abhängigkeit des vom Vorsteuerventil ausgegebenen Vorsteuerdruckes erreicht.

Gemäß einer vorteilhaften Weiterbildung ist vorgesehen, die Einstellung der Puls-Zeit und der Pausen-Zeiten zuverlässiger zu gestalten, indem während der Durchführung einer Stotterbremsung im Redundanzfall eine aktuell vorliegende Fahrzeug-Ist-Verzögerung mit der von der Redundanz-Steuereinrichtung vorgegebenen Fahrzeug-Soll-Verzögerung verglichen wird. Ergibt sich eine Abweichung, kann das Vorsteuer-Modell entsprechend angepasst werden, so dass sich Puls-Zeiten und die Pausen-Zeit ergeben, mit denen - weiterhin unter Berücksichtigung der Grenz-Zeit und des Grenz-Druckes - die Fahrzeug-Ist-Verzögerung an die Fahrzeug-Soll-Verzögerung angenähert wird.

Dabei kann vorteilhafterweise weiterhin berücksichtigt werden, ob sich die Fahrzeug-Parameter und/oder das niedrige Druckniveau und/oder das hohe Druckniveau vor oder während der Stotterbremsung verändert haben. Dadurch können vorteilhafterweise Ungenauigkeiten ausgeblichen werden, die entweder bei der Stotterbremsung auftreten, weil sich das hohe Druckniveau im Druckmittelvorrat bei einer Bremsung ändert, oder bereits davor vorhanden waren, weil beispielsweise eine Veränderung der Fahrzeugmasse durch eine geänderte Beladung oder des Anhänger-Zustandes nicht eingespeichert wurden. Mit einer derartigen Regelung können derartige Ungenauigkeiten in einfacher Weise ausgeglichen werden.

Vorteilhafterweise werden die Puls-Zeiten und die Pausen-Zeiten beispielsweise in dem Vorsteuer-Modell derartig abgestimmt, dass eine Erhaltung der Fahrstabilität durch die Stotterbremsung bei typischen Fahrsituationen erreicht wird. Unter einer typischen Fahrsituation ist hierbei zu verstehen, dass sich das Fahrzeug auf einem Untergrund bewegt, auf dem zumindest Reibwerte von 0,6 erreicht werden können. Dabei handelt es sich vorzugsweise um nassen oder trockenen Beton oder Asphalt.

Damit sind vorteilhafterweise ca. 95% der üblichen Fahrsituationen abgedeckt, in denen auch ein automatisiertes Fahren standardmäßig durchgeführt wird. In den übrigen Fahrsituationen, beispielsweise auf Schnee, Eis, Kopfsteinpflaster oder bei starkem Regen werden geringere Reibwerte erreicht, bei denen das automatisierte Fahren nicht verbreitet ist bzw. im Hinblick auf den redundanten Betrieb einzuschränken ist, so dass eine Abstimmung darauf entfallen kann.

Der redundante Betrieb über die Redundanz-Steuereinrichtung kann hierbei beispielsweise erkannt werden, wenn der Redundanz-Steuereinrichtung ein entsprechendes Diagnose-Signal zugeleitet wird, beispielsweise von einer Betriebsbrems-Steuereinrichtung, einer Assistenz-Steuereinrichtung und/oder wenn die Redundanz-Steuereinrichtung in irgendeiner Weise selbst erkennt, dass ein Defekt bei der elektronischen Ansteuerung vorliegt.

Vorzugsweise kann das Vorsteuerventil an der Vorderachse und/oder an der Hinterachse des Fahrzeuges angeordnet sein, um je nach Anwendung im Redundanzfall an der jeweiligen Fahrzeugachse eine Bremswirkung zu erzielen und gleichzeitig die Fahrstabilität zu erhalten bzw. zu erhöhen.

Zum Erhöhen der Zuverlässigkeit im Redundanzfall kann die Redundanz-Steuereinrichtung von einer zusätzlichen zweiten Energiequelle und/oder einem Generator, beispielsweise einer Lichtmaschine und/oder einem Kurzzeitspeicher und/oder einem Hochvoltspeicher versorgt werden, die unabhängig von einer ersten Energiequelle sind, die im Normalbetrieb für eine elektrische Versorgung des Bremssystems sorgen.

Im Normalbetrieb kann die Ansteuerung der Radbremsen entweder in einem elektropneumatischen Bremssystem oder in einem rein pneumatischen Bremssystem erfolgen. In einem elektropneumatischen Bremssystem werden von der Betriebsbrems-Steuereinrichtung elektrisch die Achsmodulatoren angesteuert, die dann einen entsprechenden Betriebsbrems-Bremsdruck erzeugen und an die Radbremsen aussteuern. In einem rein pneumatischen Bremssystem wird der Bremswunsch im Normalbetrieb hauptsächlich vom Fahrer vorgegeben. Lediglich Assistenz-Systeme, beispielsweise eine Abstandsregelung (ACC), können elektrisch einen Bremswunsch (XBR) vorgeben, der über das Vorsteuerventil entsprechend pneumatisch umgesetzt werden kann.

Wird in den Redundanzfall gewechselt, wird von der Redundanz-Steuereinrichtung wie oben beschrieben gebremst, indem diese das Vorsteuerventil mit dem Redundanz-Signal ansteuert. In einem rein pneumatischen Bremssystem kann dies dadurch geschehen, dass sowohl das vom entsprechenden Assistenz-System vorgegebene Signal als auch das Redundanz-Signal unabhängig voneinander an einen elektrischen Vorsteuer-Steuereingang geleitet werden. Der Vorsteuer-Steuereingang weist dann beispielsweise eine Doppelspule auf, so dass unabhängig voneinander ein Magnetanker des Vorsteuerventils betätigt werden kann.

Alternativ kann das vom entsprechenden Assistenz-System vorgegebene Signal auch an die Redundanz-Steuereinrichtung gegeben werden, die dann entsprechend entkoppelt, z.B. über Dioden, entweder dieses oder des Redundanz-Signal an das Vorsteuerventil weiterleitet, um einen Vorsteuerdruck zu erzeugen.

Die Erfindung wird im Folgenden anhand der beiliegenden Zeichnung erläutert. Es zeigen:
- Fig. 1: ein erfindungsgemäßes elektropneumatisch gesteuertes Bremssystem mit einem Vorsteuerventil als Blockschaltbild;
- Fig. 2a,b,c: Varianten zur Energieversorgung des elektropneumatisch gesteuerten Bremssystems gemäß Fig. 1;
- Fig. 3: ein zeitlicher Verlauf eines gepulsten Vorsteuerdrucks in einem Bremssystem gemäß Fig. 1;
- Fig. 4, 5: Ausführungsformen eines weiteres erfindungsgemäßen Bremssystems mit einer rein pneumatischen Ansteuerung von Betriebsbremsen; und
- Fig. 6: ein Flussdiagramm zur Durchführung des Verfahrens.

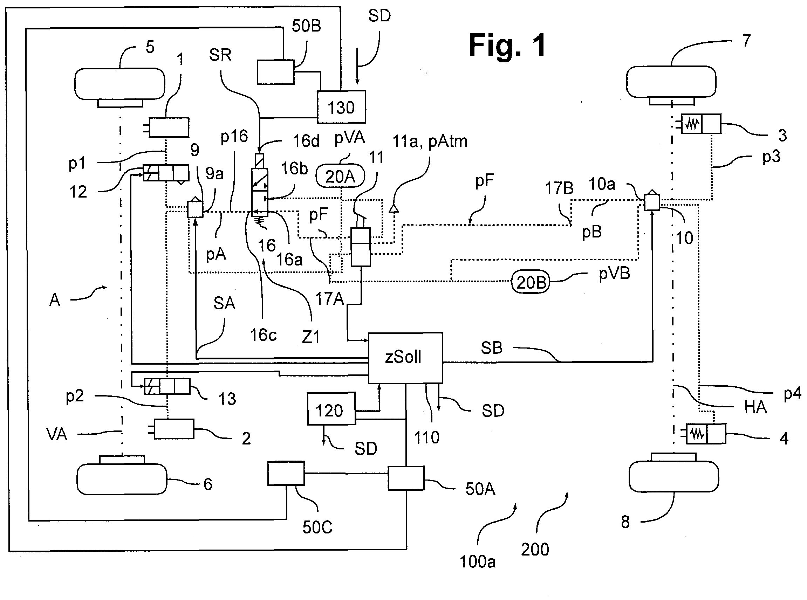

Gemäß Fig. 1 ist ein Ausschnitt aus einem elektropneumatischen Bremssystem 100a eines Fahrzeuges 200, insbesondere Nutzfahrzeuges, als Blockschaltbild dargestellt, wobei das elektropneumatische Bremssystem als EBS-Bremssystem 100a ausgeführt ist, d.h. eine Bremsvorgabe erfolgt im Normalbetrieb elektrisch. Das EBS-Bremssystem 100a weist dazu mehrere Radbremsen 1, 2, 3, 4 auf, die dazu dienen, das Fahrzeug 200 abzubremsen. Zum Abbremsen sind zwei Bremskreise A, B vorgesehen, denen jeweils ein Druckmittelvorrat 20A, 20B zugeordnet ist, um die jeweiligen Bremskreise A, B mit einem Druckmittel zu versorgen und somit den Aufbau eines Betriebsbrems-Bremsdruckes p1, p2, p3, p4 für die jeweiligen Radbremsen 1, 2, 3, 4 des Fahrzeuges 200 zu ermöglichen. In jedem Druckmittelvorrat 20A, 20B herrscht ein entsprechender Vorratsdruck pVA, pVB, wobei im ersten und im zweiten Druckmittelvorrat 20A, 20B ein Vorratsdruck pVA, pVB von beispielsweise 12bar vorherrscht.

In einem ersten Bremskreis A sind die Radbremsen 1, 2 an den Rädern 5, 6 einer Vorderachse VA angeordnet, wobei die Radbremsen 1, 2 als Betriebsbremsen ausgeführt sind. Die Radbremsen 3, 4 an einer Hinterachse HA sind als kombinierte Federspeicher- und Betriebsbremsen ausgeführt, so dass die Räder 7, 8 der Hinterachse HA unabhängig voneinander zum einen über einen zweiten Bremskreis B über eine Betriebsbremsfunktion und zusätzlich auch über eine nicht dargestellte Parkbremsfunktion abgebremst werden können.

In den ersten beiden Bremskreisen A, B werden die Betriebsbrems-Bremsdrücke p1, p2, p3, p4 im Normalbetrieb über elektrisch gesteuerte Achsmodulatoren 9, 10 erzeugt, indem von einer Betriebsbrems-Steuereinrichtung 110 (ECU) Steuersignale SA, SB an die Achsmodulatoren 9, 10 elektrisch übermittelt werden, die dann versorgt vom entsprechenden Druckmittelvorrat 20A, 20B einen bestimmten Betriebsbrems-Bremsdruck p1, p2, p3, p4 aussteuern. Die Höhe der Betriebsbrems-Bremsdrücke p1, p2, p3, p4 ergibt sich insbesondere aus einer angeforderten Fahrzeug-Soll-Verzögerung zSoll, die gemäß diesem Ausführungsbeispiel aus einer vom Fahrer über ein Fußbremsventil 11 manuell vorgegebenen Anforderung oder von einer Assistenz-Steuereinrichtung 120 (ADAS-ECU, (A)dvanced-(D)river-(AS)sistance), die zur automatisierten Steuerung des Fahrzeuges 200 vorgesehen ist, folgt.

Auf einen ABS-Bremsschlupffall an den Rädern 5, 6, 7, 8 beiden Fahrzeugachsen VA, HA kann über eine entsprechende elektrische Ansteuerung des jeweiligen Achsmodulators 9, 10 reagiert werden, wobei dazu an der Vorderachse VA zusätzliche ABS-Steuerventile 12, 13 angesteuert werden, die im Normalbetrieb bei erkanntem Bremsschlupffall den Betriebsbrems-Bremsdruck p1, p2 halten oder verringern können. An der Hinterachse HA werden die Betriebsbrems-Bremsdrücke p3, p4 bei erkanntem Bremsschlupffall direkt vom zweiten Achsmodulator 10 entsprechend angepasst.

Bei einem Ausfall oder einem Defekt D in der elektronischen Ansteuerung der beiden Achsmodulatoren 9, 10 kann in dem EBS-Bremssystem 100a gemäß Fig. 1 auf eine pneumatische Rückfallebene gewechselt werden, indem ein bei einer Betätigung des Fußbremsventils 11 durch den Fahrer pneumatisch ausgegebener Betätigungsdruck pF als ein pneumatischer Betriebsbrems-Steuerdruck pA, pB an den jeweiligen Achsmodulator 9, 10 des jeweiligen Bremskreises A, B ausgesteuert wird. Ein erster Betriebsbrems-Steuerdruck pA wird hierbei an einen ersten pneumatischen Steuereingang 9a am ersten Achsmodulator 9 und ein zweiter Betriebsbrems-Steuerdruck pB an einen zweiten pneumatischen Steuereingang 10a am zweiten Achsmodulator 10 geleitet, wobei die pneumatischen Steuereingänge 9a, 10a im Redundanzfall zur Ansteuerung des jeweiligen Achsmodulators 9, 10 freigegeben werden.

Der jeweilige Achsmodulator 9, 10 verstärkt den Betriebsbrems-Steuerdruck pA, pB entsprechend und gibt einen luftmengenverstärkten Betriebsbrems-Bremsdruck p1, p2, p3, p4 an die entsprechenden Radbremsen 1, 2, 3, 4 aus. Somit kann von einer elektronischen Ansteuerung der Achsmodulatoren 9, 10 im pneumatischen Redundanzfall auf eine pneumatische Ansteuerung durch das Fußbremsventil 11 gewechselt werden.

Weiterhin ist im EBS- Bremssystem 100a ein Vorsteuerventil 16 vorgesehen, das in einer dem ersten Bremskreis A zugeordneten ersten Steuerleitung 17A, die das Fußbremsventil 11 mit dem ersten Achsmodulator 9 an der Vorderachse VA verbindet angeordnet ist. Alternativ oder ergänzend kann auch ein nicht dargestelltes Vorsteuerventil 16 in einer dem zweiten Bremskreis B zugeordneten zweiten Steuerleitung 17B, die das Fußbremsventil 11 mit dem zweiten Achsmodulator 10 an der Hinterachse HA verbindet angeordnet sein.

Das Vorsteuerventil 16 kann beispielsweise als monostabiles, elektrisch steuerbares 3/2-Wegeventil, beispielsweise als ein Solenoid-Ventil, ausgeführt sein, das in zwei Schaltstellungen Z1, Z2 gebracht werden kann und das dazu dient, in der jeweiligen Steuerleitung 17A, 17B einen Betriebsbrems-Steuerdruck pA, pB an den jeweiligen Achsmodulator 9, 10 vorzugeben.

Ein erster Vorsteuer-Eingang 16a des Vorsteuerventils 16 ist gemäß Fig. 1 mit dem Fußbremsventil 11 und ein zweiter Vorsteuer-Eingang 16b mit dem dem ersten Bremskreis A zugeordneten ersten Druckmittelvorrat 20A verbunden. Ein Vorsteuer-Ausgang 16c, der einen Vorsteuerdruck p16 ausgibt, ist mit dem ersten pneumatischen Steuereingang 9a am ersten Achsmodulator 9 verbunden, so dass der erste Betriebsbrems-Steuerdruck pA für den ersten Bremskreis A, der in diesem Ausführungsbeispiel gleich dem Vorsteuerdruck p16 ist, je nach Schaltstellung Z1, Z2 entweder in Abhängigkeit des Betätigungsdruckes pF oder in Abhängigkeit des ersten Vorratsdruckes pVA vorgegeben wird. Ein Vorsteuer-Steuereingang 16d des Vorsteuerventils 16 ist mit einer Redundanz-Steuereinrichtung 130 elektrisch verbunden, die in dieser Ausführungsform die Steuerung des Vorsteuerventils 16 übernimmt.

In der ersten Schaltstellung Z1 des Vorsteuerventils 16 wird der in Abhängigkeit von der Fahrerbetätigung erzeugte Betätigungsdruck pF an den Vorsteuer-Ausgang 16c durchgeleitet und als Vorsteuerdruck p16 ausgesteuert, so dass dieser als erster Betriebsbrems-Steuerdruck pA am ersten pneumatischen Steuereingang 9a anliegt. In der zweiten Schaltstellung Z2 des Vorsteuerventils 16 wird der erste Druckmittelvorrat 20A mit dem Vorsteuer-Ausgang 16c verbunden, so dass als Vorsteuerdruck p16 der im ersten Druckmittelvorrat 20A vorherrschende erste Vorratsdruck pVA ausgegeben wird.

Somit wird in der ersten Schaltstellung Z1 durch den ersten Achsmodulator 9 ein dem Fahrerwunsch entsprechender Betriebsbrems-Bremsdruck p1, p2 an die jeweiligen Radbremsen 1, 2 ausgesteuert. Bei unbetätigtem Fußbremsventil 11 führt das Umschalten des Vorsteuerventils 16 in die erste Schaltstellung Z1 daher automatisch zu einer Entlüftung der ersten Steuerleitung 17A, da über einen Entlüftungsanschluss 11a am Fußbremsventil 11 der Betätigungsdruck pF in etwa auf Atmosphärendruck pAtm reduziert wird. Dementsprechend wird auch ein niedriger erster Betriebsbrems-Steuerdruck pA und ein niedriger Betriebsbrems-Bremsdruck p1, p2 an die jeweiligen Radbremsen 1, 2 der Vorderachse VA ausgesteuert, das Fahrzeug 200 wird somit zumindest im Redundanzfall in dem ersten Bremskreis A nicht abgebremst. Da der Betätigungsdruck pF über die zweite Steuerleitung 17B auch an die Hinterachse HA ausgegeben wird, wird auch dort ein niedriger Betriebsbrems-Bremsdruck p3, p4 eingestellt.

In der zweiten Schaltstellung Z2 hingegen wird ein dem ersten Vorratsdruck pVA entsprechender Betriebsbrems-Bremsdruck p1, p2 an der Vorderachse VA erzeugt. Da normalerweise ein hoher erster Vorratsdruck pVA vorliegt - beispielsweise 12bar - führt die zweite Schaltstellung Z2 daher zu einer maximalen Betätigung der jeweiligen Radbremsen 1, 2 an der Vorderachse VA. Somit wird in einfacher Weise erreicht, dass das Fahrzeug 200 bei eingestellter zweiter Schaltstellung Z2 zumindest an der Vorderachse VA mit maximaler Bremswirkung elektronisch gesteuert abgebremst werden kann. Die Beaufschlagung der Radbremsen 1, 2 erfolgt dann zunächst kontinuierlich mit gleichbleibendem Betriebsbrems-Bremsdruck p1, p2. An der Hinterachse HA wird gemäß Fig. 1 weiterhin lediglich in Abhängigkeit des Betätigungsdruckes pF gebremst.

Das Vorsteuerventil 16 steuert somit je nach Schaltstellung Z1, Z2 als Vorsteuerdruck p16 ein hohes Druckniveau pHigh, d.h. den ersten Vorratsdruck pVA, oder ein niedriges Druckniveau pLow, d.h. den Atmosphärendruck pAtm oder bei einer Fahreranforderung den entsprechenden Betätigungsdruck pF, aus.

Im Redundanzfall ist zumindest an der Vorderachse VA immer automatisch eine Anpassung des Betriebsbrems-Bremsdruckes p1, p2 an den vorherrschenden ersten Betriebsbrems-Steuerdruck pA vorgesehen, der durch die Schaltstellung Z1, Z2 des Vorsteuerventils 16 bestimmt wird. Ein -Halten des Betriebsbrems-Bremsdruckes p1, p2 nach einem Umschalten des Vorsteuerventils 16 oder nach einer Reduzierung der Bremsanforderung ist zumindest dann nicht möglich, wenn das Vorsteuerventil 16 in seiner einfachsten Variante als monostabiles 3/2-Wegeventil ausgeführt ist. Das Vorsteuerventil 16 sorgt dann lediglich dafür, dass im Notfall bei einem Ausfall der Elektronik elektronisch redundant ein garantiertes Abbremsen in einen sicheren Zustand erfolgen kann.

Gesteuert wird das Einstellen der entsprechenden Schaltstellung Z1, Z2 des Vorsteuerventils 16 gemäß der Ausführungsform in Fig. 1 durch eine Redundanz-Steuereinrichtung 130 (Redundanz-ECU), die beispielsweise bei einem elektrischen Ausfall der Assistenz-Steuereinrichtung 120 und/oder der Betriebsbrems-Steuereinrichtung 110 und/oder des entsprechenden Achsmodulators 9, 10 elektrisch redundant in die Bremsung eingreifen kann, indem sie ein Redundanz-Signal SR ausgibt, über das das Vorsteuerventil 16 bestromt wird. Ein Ausfall der Betriebsrems-Steuereinrichtung 110 und/oder der Assistenz-Steuereinrichtung 120 und/oder der elektronischen Ansteuerung der Achsmodulatoren 9, 10 kann hierbei beispielsweise über ein Diagnose Signal SD festgestellt werden. Das Diagnose-Signal SD kann in einer Eigendiagnose von der entsprechenden Steuereinrichtung 110, 120 ermittelt werden.

Um im Redundanzfall eine Versorgung der Redundanz-Steuereinrichtung 130 mit Energie sicherzustellen, sind mehrere Möglichkeiten vorgesehen. Gemäß einer Ausführungsform ist wie in Fig. 1 dargestellt eine erste Energiequelle 50A vorgesehen, die sowohl die Betriebsbrems-Steuereinrichtung 110, die Assistenz-Steuereinrichtung 120 und ggf. auch die Redundanz-Steuereinrichtung 130 mit Energie versorgt sowie eine zweite, die Redundanz-Steuereinrichtung 130 ebenfalls oder ausschließlich versorgende Energiequelle 50B. Die erste Energiequelle 50A und die zweite Energiequelle 50B sind beide an einen Generator 50C, beispielsweise eine Lichtmaschine des Nutzfahrzeugs 200, angeschlossen.

Bei einem Ausfall der ersten Energiequelle 50A, bei der das elektropneumatische Bremssystem 100a nicht mehr über die Betriebsbrems-Steuereinrichtung 110 und die Achsmodulatoren 9, 10 elektrisch gesteuert werden kann, ist somit eine elektrisch redundante Ansteuerung über die Redundanz-Steuereinrichtung 130 sichergestellt, da die zweite Energiequelle 50B den Ausfall kompensieren kann.

Alternativ kann auch lediglich die erste an den Generator 50C angeschlossene Energiequelle 50A verwendet werden, die über eine Sicherung mit der Betriebsbrems-Steuereinrichtung 110 und der Assistenz-Steuereinrichtung 120 und über eine weitere Sicherung mit der Redundanz-Steuereinrichtung 130 verbunden ist.

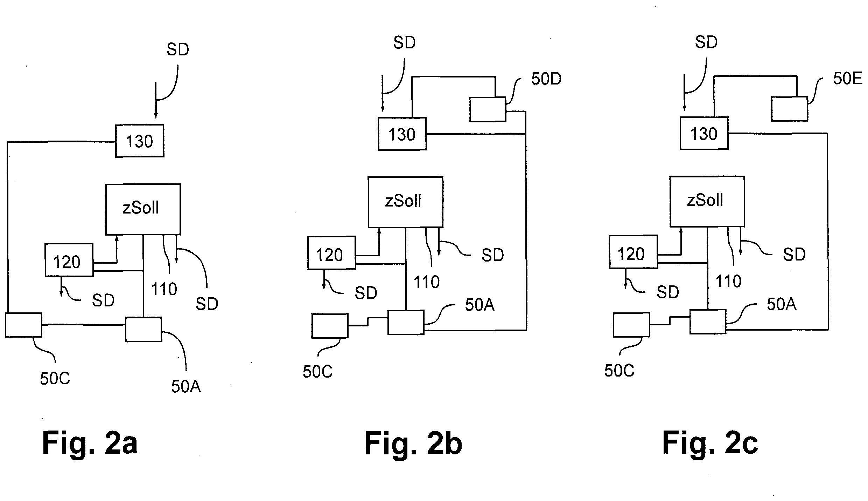

Gemäß einer in Fig. 2a dargestellten alternativen Ausführungsform ist vorgesehen, die Redundanz-Steuereinrichtung 130 in entsprechender Weise direkt an den Generator 50C anzuschließen und darüber eine Energieversorgung sicherzustellen und die Betriebsbrems-Steuereinrichtung 110 und die Assistenz-Steuereinrichtung 120 an die erste Energiequelle 50A. Der Generator 50C und die erste Energiequelle 50A sind dabei derartig voneinander getrennt, dass ein Kurzschluss im Generator 50C nicht zwangsläufig für einen Kurzschluss in der ersten Energiequelle 50A und umgedreht sorgt, so dass beide im Redundanzfall unabhängig voneinander Energie liefern können.

Gemäß einer in Fig. 2b dargestellten Ausführungsform ist vorgesehen, einen Kurzzeitspeicher 50D, beispielsweise einen Kondensator, insbesondere ein Power-Cap, als Energiequelle zu verwenden, der von der ersten Energiequelle 50A im Normalbetrieb aufgeladen wird. Fällt die erste Energiequelle 50A aus, wird der aufgeladene Kurzzeitspeicher 50D als Energiequelle für die Redundanz-Steuereinrichtung 130 verwendet.

Gemäß einer weiteren Ausführungsform ist gemäß Fig. 2c vorgesehen, einen Hochvoltspeicher 50E als redundante Energieversorgung zu verwenden, der in Hybridfahrzeugen als Energiequelle für einen Antrieb verwendet wird. Dieser ist ebenfalls unabhängig von der ersten Energiequelle 50A und kann somit als redundante Energiequelle für die Redundanz-Steuereinrichtung 130 verwendet werden.

Alternativ kann auch ein zusätzliches redundantes Bordnetz aufgebaut werden.

In der ersten Schaltstellung Z1 ist das Vorsteuerventil 16 unbestromt, d.h. das Vorsteuerventil 16 wird von der Redundanz-Steuereinrichtung 130 nicht mit dem Redundanz-Signal SR angesteuert. Diese erste Schaltstellung Z1 ist somit eine stabile Schaltstellung, in die das Vorsteuerventil 16 ohne ein vorgegebenes Redundanz-Signal SR automatisch zurückfällt, was beispielsweise durch eine Federvorspannung erreicht werden kann. Somit hat der Fahrer auch bei einem Ausfall der Redundanz-Steuereinrichtung 130 noch die Möglichkeit, in die Bremsung einzugreifen. Zudem wird ein ungewolltes Bremsen bei einem Stromausfall oder einer fehlerhaften Ansteuerung, beispielsweise eine Unterbrechung der elektrischen Verbindung, verhindert. Die zweite Schaltstellung Z2 wird durch Ausgeben eines entsprechenden Redundanz-Signals SR bewirkt, das für ein Bestromen des Vorsteuerventils 16 sorgt.

Um im Redundanzfall eine Fahrstabilität des Nutzfahrzeuges 200 zu erhalten, da die ABS-Steuerung über die ABS-Steuerventile 12, 13 aufgrund des elektrischen Ausfalls in der Betriebsbrems-Steuereinrichtung 110, der Assistenz-Steuereinrichtung 120 und/oder der elektrischen Ansteuerung der Achsmodulatoren 9, 10 nicht mehr durchgeführt werden kann und somit auf diese Weise nicht auf einen Bremsschlupffall reagiert werden kann, wird das Vorsteuerventil 16 von der Redundanz-Steuereinrichtung 130 erfindungsgemäß derartig gepulst angesteuert, beispielsweise mit einem pulsweitenmodulierten Redundanz-Signal SR, dass eine Stotterbremsfunktion SF ausgebildet wird. D.h. das Vorsteuerventil 16 wird abwechselnd zwischen der ersten Schaltstellung Z1 und der zweiten Schaltstellung Z2 umgeschaltet.

Dadurch sind der ausgesteuerte Vorsteuerdruck p16 und somit auch der erste Betriebsbrems-Steuerdruck pA nicht konstant sondern schwingen zwischen dem Betätigungsdruck pF (erste Schaltstellung Z1) und dem ersten Vorratsdruck pVA (zweite Schaltstellung Z2) hin und her. Findet im Redundanzfall keine manuelle Betätigung des Fußbremspedals 11 statt, schwingen der Vorsteuerdruck p16 bzw. erste Betriebsbrems-Steuerdruck pA somit zwischen dem vom Belüftungsanschluss 11a vorgegebenen Atmosphärendruck pAtm und dem ersten Vorratsdruck pVA hin und her. Die durchströmten Leitungen und Ventile sorgen hierbei für eine Art Tiefpassfilterung, die dafür sorgt, dass der Vorsteuerdruck p16 bzw. der erste Betriebsbrems-Steuerdruck pA weniger stark ansteigen bzw. abfallen, wenn zwischen den beiden Schaltstellungen Z1, Z2 hin und hergeschaltet wird, so dass der Betätigungsdruck pF bzw. der erste Vorratsdruck pVA in der jeweiligen Schaltstellung Z1, Z2 nicht ganz erreicht werden.

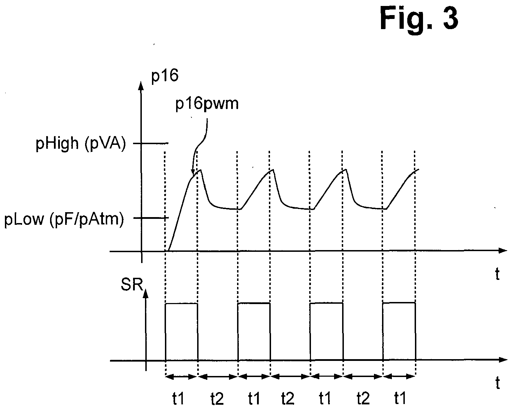

Beispielhaft ist ein derartiger zeitlicher Verlauf des Vordruckes p16 in Fig. 3 dargestellt, wobei sich durch die Pulsweitenmodulierung (PWM) des Redundanz-Signals SR ein Vorsteuerdruck-Verlauf p16pwm ergibt, der insbesondere abhängig ist von einer Puls-Zeit t1, die die Dauer einer gepulsten Ansteuerung über das Redundanz-Signal SR, d.h. die zweite Schaltstellung Z2, angibt, und einer Pausen-Zeit t2, die die Dauer dazwischen im unbestromten Zustand des Vorsteuerventils 16, d.h. in der ersten Schaltstellung Z1, angibt. Der Vorsteuerdruck-Verlauf p16pwm schwingt zwischen dem Betätigungsdruck pF (ggf. der Atmosphärendruck pAtm) und dem ersten Vorratsdruck pVA hin und her, so dass je nach Zeitpunkt t ein unterschiedlicher Vorsteuerdruck p16 bzw. erster Betriebsbrems-Steuerdruck pA an den ersten Achsmodulator 9 ausgegeben wird.

Die Puls-Zeit t1 und die Pausen-Zeit t2 sind erfindungsgemäß derartig gewählt, dass sich eine Stotterbremsung SF ergibt. Um dies zu erreichen, wird der Vorsteuerdruck p16 derartig über die Puls-Zeit t1 und die Pausen-Zeit t2 eingestellt, dass gerade eine bestimmte Welligkeit des Vorsteuerdruck-Verlaufs p16pwm und somit auch des ersten Betriebsbrems-Steuerdrucks pA erhalten bleibt. Die Einstellung wird hierbei derartig gewählt, dass in allen typischen Fahrsituationen sichergestellt ist, dass nach einem möglichen Blockieren der Räder 5, 6 der Vorderachse VA ein Wiederanlaufen der Räder 5, 6 sichergestellt ist, ohne dass es dabei einer Kontrolle bedarf. Dies ist für alle typischen Fahrsituationen insbesondere dann der Fall, wenn insbesondere bei einer Fahrzeuggeschwindigkeit von 70km/h der Betriebsbrems-Bremsdruck p1, p2 und auch der erste Betriebsbrems-Steuerdruck pA an den Radbremsen 1, 2 der Vorderachse VA zumindest über eine Grenz-Zeit tGrenz von ca. 0,25s wiederkehrend unter einem Betriebsbrems-Grenzdruck pGrenz von 1bar liegt.

Als typische Fahrsituation wird hierbei beispielsweise eine nasse oder eine trockene Fahrbahn mit z.B. Beton oder Asphalt und einem Reibwert f im schlimmsten Fall von 0,6-0.8 verstanden. Da ein autonome Steuerung bei beispielsweise Eis, Schnee, starkem Regen oder Kopfsteinpflaster, d.h. bei niedrigerem Reibwert f als 0,6, im Normalfall nur eingeschränkt ist, ist die Stotterbremsung SF auf derartige Situationen nicht abzustimmen. Vielmehr wird sichergestellt, dass lediglich für typische Fahrsituationen, z.B. Autobahnfahrten bei nasser oder trockner Fahrbahn, eine redundante Stotterbremsung SF bewirkt werden kann. Als typische Fahrsituation wird somit eine Fahrt bei einem Reibwert f von mindestens 0,6 verstanden.

Zur Bestimmung der Puls-Zeit t1 sowie der Pausen-Zeit t2 zum Bewirken der Stotterbremsung SF wird zunächst eine von der Redundanz-Steuereinrichtung 130 im Redundanzfall vorgegebene Fahrzeug-Soll-Verzögerung zSoll zum Abbremsen des Nutzfahrzeuges 200 in einen sicheren Zustand, z.B. den Stillstand oder auf eine sichere Fahrzeuggeschwindigkeit vFzg, in einen auszusteuernden Vorsteuerdruck p16 umgerechnet. Dazu wird berücksichtigt, dass der erste Betriebsbrems-Steuerdruck pA bzw. der Betriebsbrems-Bremsdruck p1, p2 für die Grenz-Zeit tGrenz wiederkehrend unter den Betriebsbrems-Grenzdruck pGrenz zu fallen hat, um ein Wiederanlaufen der Räder 5, 6 an der Vorderachse VA sicherzustellen.

Anhand dieser Angaben und in Kenntnis von Ventilcharakteristiken C des elektropneumatischen Bremssystems 100a sowie des ersten Vorratsdruckes pVA, des Betätigungsdruckes pF sowie optional auch einer Fahrzeugmasse M und eines Anhängerzustandes ZA kann von der Redundanz-Steuereinrichtung 130 die Puls-Zeit t1 sowie die Pausen-Zeit t2 unter Verwendung eines Vorsteuer-Modells VM bestimmt werden. Das Vorsteuer-Modell VM kann beispielsweise anhand von vorherigen Versuchen ermittelt werden und verschiedene Kennlinien aufweisen.

Beispielhafte Werte für die Puls-Zeit t1 und die Pausen-Zeit t2, die aus dem Vorsteuer-Modell VM für das elektropneumatische Bremssystem 100a gemäß Fig. 1 folgen, sind bei einem ersten Vorratsdruck pVA von zwischen 8,5bar und 12,5bar beispielsweise t1 = 0,1s und t2 = 0,23s. Diese Werte erfüllen für normale Nutzfahrzeuge 200 bei typischen Fahrsituationen, d.h. Reibwerten von größer als 0,6, die genannten Bedingungen, dass die Räder 5, 6 bei einem möglichen Blockieren wiederanlaufen können, da für zumindest 0,25s wiederkehrend ein Betriebsbrems-Bremsdruck p1, p2 von unter 1bar erreicht wird, sowie gleichzeitig eine Stotterbremsung SF bewirkt wird. Dabei kann eine Fahrzeug-Verzögerung zSoll von 1,2m/s² sowie eine gute Lenkbarkeit gewährleistet werden und es wird im Mittel ein erster Betriebsbrems-Steuerdruck pA ausgesteuert, der ca. 1bar beträgt. Bei t1 = 0,32s und t2 = 0,45s wird eine Fahrzeug-Soll-Verzögerung zSoll von 2,4m/s² und ein erster Betriebsbrems-Steuerdruck pA von im Mittel ca. 2,2 bar erreicht, wobei auch hier die genannten Bedingungen an ein Wiederanlaufen der Räder 5, 6 bei einem minimalen Reibwert f erfüllt werden.

Durch die Einstellung der Puls-Zeiten t1 und der Pausen-Zeiten t2 wird eine Fahrzeug-Verzögerung zSoll eingestellt, durch die das Nutzfahrzeug 200 im Redundanzfall in den Stillstand oder einen sicheren Zustand überführt wird, wobei ein mittlerer Betriebsbrems-Steuerdruck pA bzw. Betriebsbrems-Bremsdruck p1, p2 eingestellt wird, der eine gewollte Restwelligkeit aufweist, um die Stotterbremsung SF zum Erhalten der Fahrstabilität bei einer typischen Fahrsituation bewirken zu können.

Somit kann auch dann ein Blockieren der Räder 5, 6 vermieden werden, wenn im Redundanzfall die ABS-Steuerventile 12, 13 nicht funktionieren, da diese aufgrund des Ausfalls oder des Defekts D nicht elektrisch von der Betriebsbrems-Steuereinrichtung 110 angesteuert werden können. Ein Erhalten der Fahrstabilität ist somit nicht daran gekoppelt, dass die ABS-Steuerventile 12, 13 korrekt funktionieren. Vielmehr wird direkt ein Vorsteuerdruck p16 bzw. ein erster Betriebsbrems-Steuerdruck pA bereitgestellt, mit dem für diese Fahrstabilität gesorgt werden kann.

Um Fehler im Vorsteuer-Modell VM auszuregeln, kann ein zusätzlicher Beschleunigungssensor vorgesehen sein oder aus einer Geschwindigkeit der Hinterachse HA eine Fahrzeug-Ist-Verzögerung zlst ermittelt werden, über die feststellt werden kann, ob die von der Redundanz-Steuereinrichtung 130 im Redundanzfall geforderte Fahrzeug-Soll-Verzögerung zSoll, aufgrund derer die Puls-Zeiten t1 und die Pausen-Zeiten t2 berechnet werden, tatsächlich erreicht wird. Falls dies nicht der Fall ist, weil beispielsweise eine Beladung oder ein Anhängerzustand ZA stark abweicht, kann das Vorsteuer-Modell VM auch korrigiert werden, so dass die Puls-Zeit t1 und die Pausen-Zeit t2 entsprechend angepasst werden können. Somit kann eine zusätzliche Regelung der Fahrzeug-Soll-Verzögerung zSoll stattfinden, die die Zuverlässigkeit der Stotterbremsung SF erhöht.

Zu Beginn einer Stotterbremsung SF im Redundanzfall kann das Vorsteuer-Modell VM beispielsweise die Fahrzeugmasse M und den Anhängerzustand ZA annehmen, die zuletzt von der Betriebsbrems-Steuereinrichtung 110 gemeldet wurden, um die Puls-Zeit t1 und die Pausen-Zeit t2 zu ermitteln.

Die Puls-Zeit t1 und die Pausen-Zeit t2 können hierbei derartig ausgelegt werden, dass akzeptable Werte für die Fahrzeug-Soll-Verzögerung zSoll, die Fahrstabilität und die Lenkbarkeit bei einem redundanten Eingriff gewährleistet werden können. Dies ist insbesondere dann vorteilhaft, wenn eine Bremsschlupfregelung über die Betriebsbrems-Steuereinrichtung 110 und die elektrische Ansteuerung des Achsmodulators 9, 10 über das Steuersignal SA, SB nicht funktioniert, da ein elektrischer Fehler vorliegt, und somit auch die ABS-Steuerventile 12, 13 nicht mehr angesteuert werden können, die im Normalfall einen Bremsschlupffall ausregeln.

Um den eingeschwungenen Zustand zum Erreichen der Stotterbremsung SF schneller zu erreichen, kann vorgesehen sein, die erste oder die ersten Puls-Zeiten t1 zu Beginn der Stotterbremsung SF länger zu wählen, so dass der erste Betriebsbrems-Steuerdruck pA bzw. der Betriebsbrems-Bremsdruck p1, p2 für die Vorderachse VA schneller auf das benötigte Druckniveau ansteigen.

Aufgrund des dauerhaften Umschaltens zwischen der ersten und der zweiten Schaltstellung Z1, Z2 sinkt der erste Vorratsdruck pVA nach längerem Stotterbremsen SF ab, da dadurch das Druckmittel schneller verbraucht wird. Dies kann in dem Vorsteuer-Modell VM entsprechend berücksichtigt werden, indem bei länger anhaltender Stotterbremsung SF die Puls-Zeit t1 entsprechend erhöht wird, um das Druckniveau zu halten. Dieser Einfluss kann durch Beobachtung der Fahrzeug-Ist-Verzögerung zlst auch genauer nachgeregelt werden.

In Fig. 1 kann das Vorsteuerventil 16 auch zwischen dem Achsmodulator 9, 10 und der jeweiligen Radbremse 1, 2, 3, 4 angeordnet sein, so dass der vom Vorsteuerventil 16 ausgesteuerte Vorsteuer-Druck p16 nicht als Betriebsbrems-Steuerdruck pA, pB an den jeweiligen Achsmodulator 9, 10 in dem jeweiligen Bremskreis A, B ausgegeben wird sondern direkt als Betriebsbrems-Bremsdruck p1, p2, p3, p4 an die Radbremsen 1, 2, 3, 4 ausgesteuert wird.

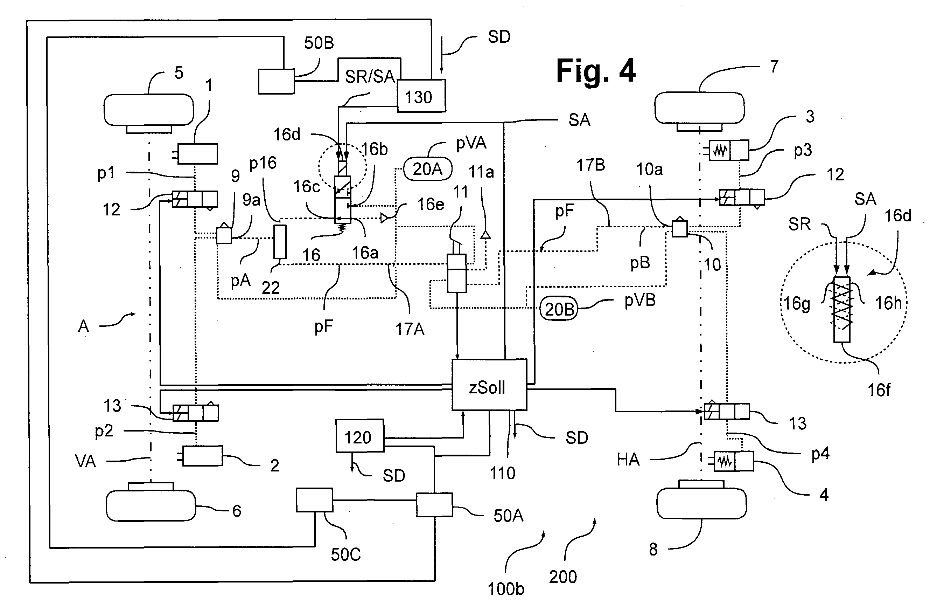

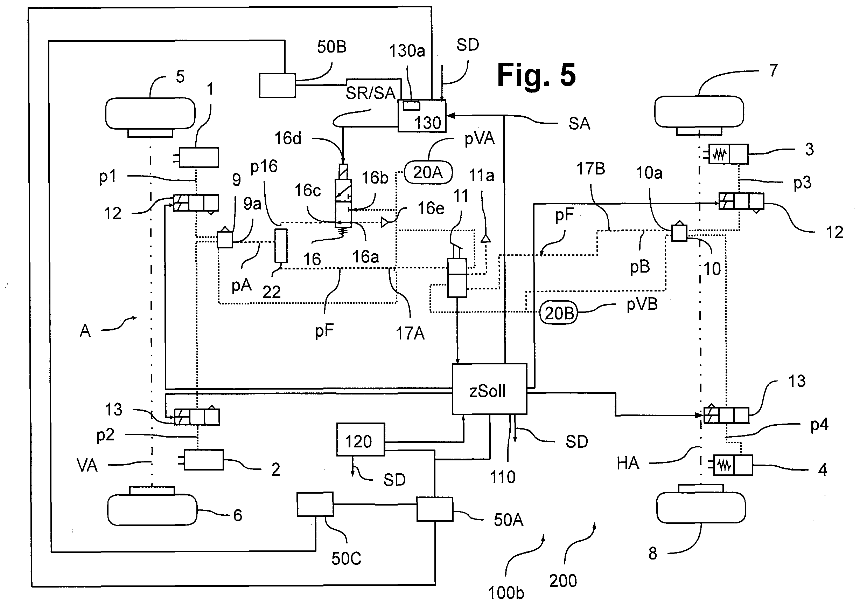

Gemäß Fig. 4 und Fig. 5 ist ein rein pneumatisches Bremssystem 100b ohne elektronische Ansteuerung der Achsmodulatoren 9, 10 dargestellt. D.h. im ersten und im zweiten Bremskreis A, B wird durch eine pneumatische Vorgabe durch Betätigung des Fußbremsventils 11 gebremst. Die ABS-Steuerventile 12, 13 an der Vorderachse VA und der Hinterachse HA, über die gesteuert von der Betriebsbrems-Steuereinrichtung 110 auf einen Bremsschlupffall an einem der Räder 5, 6, 7, 8 der Vorderachse VA oder der Hinterachse HA reagiert werden kann, werden elektronisch angesteuert. Über das zusätzliche Vorsteuerventil 16 im ersten Bremskreis A kann auch eine elektrisch gesteuerte Betätigung der Bremsen 1, 2 an der Vorderachse VA erfolgen. Dazu ist in der ersten Steuerleitung 17A ein Select-High-Ventil 22 vorgesehen, an dem der Betätigungsdruck pF sowie ein vom Vorsteuerventil 16 vorgegebener Vorsteuerdruck p16 anliegen. Das Select-High-Ventil 22 gibt den höheren der beiden Drücke pF, p16 als ersten Betriebsbrems-Steuerdruck pA an den ersten pneumatischen Steuereingang 9a des ersten Achsmodulators 9 aus, so dass von diesem entweder eine elektrische Vorgabe oder eine manuelle Vorgabe ausgesteuert werden.

Das Vorsteuerventil 16 ist gemäß der Ausführungsform in Fig. 4 über den elektrischen Vorsteuer-Steuereingang 16d sowohl mit der Redundanz-Steuereinrichtung 130 als auch mit der Betriebsbrems-Steuereinrichtung 110 verbunden. Im Normalbetrieb kann die Betriebsbrems-Steuereinrichtung 110 ein der vorgegebenen Fahrzeug-Soll-Verzögerung zSoll entsprechendes erstes Steuersignal SA an den Vorsteuer-Steuereingang 16d übermitteln. In Abhängigkeit davon wird das Vorsteuerventil 16 in die erste oder die zweite Schaltstellung Z1, Z2 umgeschaltet. Dadurch kann in einem derartigen rein pneumatischen Bremssystem 100b auch eine elektrisch angeforderte Bremsung umgesetzt werden. Das Vorsteuerventil 16 wird somit gemäß dieser Ausführungsform nicht nur für den Redundanzfall verwendet, sondern auch im Normalbetrieb, um insbesondere von einem externen System, beispielsweise einem Abstandsregelsystem (ACC), eine elektrische Bremsanforderung umsetzen zu können.

Aufgrund der Verbindung des elektrischen Vorsteuer-Steuereingangs 16d mit der Redundanz-Steuereinrichtung 130 ist jedoch auch eine redundante elektrische Steuerung möglich, indem von der Redundanz-Steuereinrichtung 130 ein Redundanz-Signal SR ausgegeben wird, in Abhängigkeit dessen das Vorsteuerventil 16 in die Schaltstellungen Z1, Z2 umgeschaltet werden kann. Bei einem Ausfall der Betriebsbrems-Steuereinrichtung 110 oder der elektrischen Übertragung an das Vorsteuerventil 16 kann somit auch eine redundante Abbremsung erfolgen, wenn über das Select-High-Ventil 22 nicht bereits eine höhere Bremsanforderung vom Fahrer vorliegt.

Der Vorsteuer-Steuereingang 16d ist gemäß dieser Ausführungsform beispielsweise mit einem doppelt umwickelten Magnetanker 16f ausgeführt, wobei eine erste Wickelung 16g in Abhängigkeit des Redundanz-Signals SR und eine zweite Wickelung 16h in Abhängigkeit des ersten Steuersignal SA bestromt werden. Sobald zumindest eine der Wickelungen 16g, 16h bestromt ist, öffnet der Magnetanker 16f und schaltet dadurch das Vorsteuerventil 16 in die zweite Schaltstellung Z2.

Somit kann das Vorsteuerventil 16 von beiden Steuereinrichtungen 110, 130 geschaltet werden.

Gemäß einer in Fig. 5 dargestellten alternativen Ansteuerung ist der Vorsteuer-Steuereingang 16d lediglich mit der Redundanz-Steuereinrichtung 130 elektrisch verbunden. Die Betriebsbrems-Steuereinrichtung 110 übermittelt in dem Fall das erste Steuersignal SA an die Redundanz-Steuereinrichtung 130. Diese weist eine Diodenschaltung 130a auf, die eine Endstufe der Redundanz-Steuereinrichtung 130 von einer Endstufe der Betriebsbrems-Steuereinrichtung 110 trennt. Die Redundanz-Steuereinrichtung 130 kann somit entweder das von der Betriebsbrems-Steuereinrichtung 110 übermittelte erste Steuersignal SA an das Vorsteuerventil 16 durchleiten oder aber selbst das Redundanz-Signal SR an das Vorsteuerventil 16 ausgeben, falls beispielsweise ein elektrischer Ausfall oder Defekt D in der Betriebsbrems-Steuereinrichtung 110 und/oder der Assistenz-Steuereinrichtung 120 oder ein beliebiger anderer Übertragungsfehler vorliegen, der das Ausgeben des ersten Steuersignals SA an das Vorsteuerventil 16 verhindert.

Somit ist sowohl in Fig. 4 als auch in Fig. 5 ein redundantes elektrisches Ansteuern über das Vorsteuerventil 16 möglich.

Sowohl in Fig. 4 als auch in Fig. 5 ist der erste Vorsteuer-Eingang 16a des Vorsteuerventils 16 mit einer Vorsteuer-Entlüftung 16e und der zweite Vorsteuer-Eingang 16b mit dem dem ersten Bremskreis A zugeordneten ersten Druckmittelvorrat 20A verbunden. Der Vorsteuer-Ausgang 16c ist mit dem Select-High-Ventil 22 verbunden, um den Vorsteuerdruck p16 vorzugeben. Liegt keine Bremsanforderung über das Fußbremsventil 11 vor, d.h. der Betätigungsdruck pF ist gering und eine elektrische Bremsung über das Vorsteuerventil 16 wird angefordert, wird vom Select-High-Ventil 22 ein Vorsteuerdruck p16 als erster Betriebsbrems-Steuerdruck pA für den ersten Bremskreis A ausgegeben, der abhängig von der Schaltstellung Z1, Z2 des Vorsteuerventils 16 ist. D.h. der erste Betriebsbrems-Steuerdruck pA wird in diesem Ausführungsbeispiel entweder in Abhängigkeit des Atmosphärendruckes pAtm in der Vorsteuer-Entlüftung 16e oder aber in Abhängigkeit des ersten Vorratsdruckes pVA vorgegeben.

Das Vorsteuerventil 16 steuert somit je nach Schaltstellung Z1, Z2 als Vorsteuerdruck p16 ein hohes Druckniveau pHigh, d.h. den ersten Vorratsdruck pVA, oder ein niedriges Druckniveau pLow, d.h. den Atmosphärendruck pAtm, aus.

Auch in den Ausführungen gemäß Fig. 4 und Fig. 5 kann mit dem Vorsteuer-Modell VM im Redundanzfall eine Stotterbremsung SF bewirkt werden, indem abwechselnd zwischen der ersten und der zweiten Schaltstellung Z1, Z2 hin und hergewechselt wird, wobei auch in diesem Fall an die Auslegung des Nutzfahrzeuges 200 angepasste Puls-Zeiten t1 und Pausen-Zeiten t2 zu wählen sind. In diesem Fall ist zu berücksichtigen, dass unabhängig von der Betätigung des Fußbremsventils 11 zwischen dem Atmosphärendruck pAtm und dem ersten Vorratsdruck pVA gewechselt wird, was das Vorsteuer-Modell VM vereinfacht.

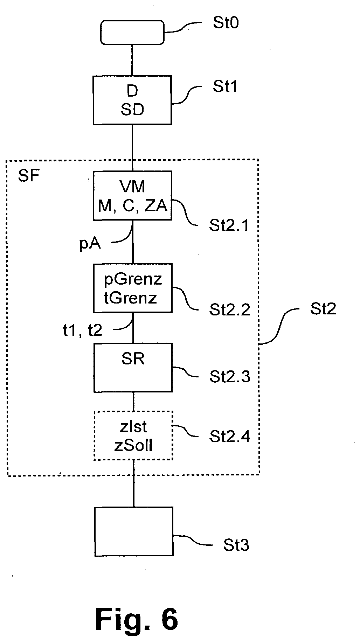

Die Ansteuerung der Bremssysteme 100a, 100b kann gemäß Fig. 6 beispielsweise folgendermaßen durchgeführt werden:
In einem anfänglichen Schritt St0 startet das Verfahren, beispielsweise mit dem Starten des Fahrzeuges 200.

In einem ersten Schritt St1 wird über das Diagnose-Signal SD von der Redundanz-Steuereinrichtung 130 festgestellt, ob ein Ausfall oder ein Defekt D in der elektrischen Ansteuerung der Achsmodulatoren 9, 10 oder des Vorsteuerventils 16 durch die Betriebsbrems-Steuereinrichtung 110 und/oder die Assistenz-Steuereinrichtung 120 vorliegt.

Ist dies der Fall, wird in einem zweiten Schritt St2 von der Redundanz-Steuereinrichtung 130 ein pulsweitenmoduliertes Redundanz-Signal SR generiert. Um im Redundanzfall eine Stotterbremsung SF zu realisieren und somit die Fahrstabilität und die Lenkbarkeit zu verbessern bzw. zu erhalten, bewirkt das pulsweitenmodulierte Redundanz-Signal SR ein dauerhaftes Umschalten zwischen der ersten und der zweiten Schaltstellung Z1, Z2 des Vorschalt-Ventils 16 mit einer Puls-Zeit t1 und einer Pausen-Zeit t2.

Dazu wird in einem ersten Zwischen Schritt St2.1 ein auf der Redundanz-Steuereinrichtung 130 gespeichertes Vorsteuer-Modell VM angewendet. Das Vorsteuer-Modell VM berücksichtigt hierbei insbesondere die Fahrzeugmasse M, Ventilcharakteristiken C, Anhängerzustände ZA sowie die Druckniveaus, zwischen denen in der ersten und der zweiten Schaltstellung Z1, Z2 hin und hergeschaltet wird.

Aufgrund einer von der Redundanz-Steuereinrichtung 130 vorgegebenen Fahrzeug-Soll-Verzögerung zSoll wird mit dem Vorsteuer-Modell VM zunächst ein auszusteuernder Betriebsbrems-Steuerdruck pA berechnet. Hierbei kann als niedriges Druckniveau pLow in der ersten Schaltstellung Z1 beispielsweise der Atmosphärendruck pAtm in der Vorsteuer-Entlüftung 16e oder aber der Betätigungsdruck pF der vom Fußbremsventil 11 vorgegeben wird, angenommen werden. Als hohes Druckniveau pHigh in der zweiten Schaltstellung Z2 wird der erste Vorratsdruck pVA angenommen. Durch das Umschalten wird zwischen dem entsprechenden niedrigen Druckniveau pLow und dem hohen Druckniveau pHigh hin und hergeschaltet.

Unter Berücksichtigung der Vorgabe zur Umsetzung einer Stotterbremsung SF, dass der Betriebsbrems-Steuerdruck pA zumindest für die Grenz-Zeit tGrenz von beispielsweise 0,25s wiederkehrend unterhalb des Grenz-druckes pGrenz von beispielsweise 1bar zu bleiben hat, wird dann in einem zweiten Zwischenschritt St2.2 mit dem Vorsteuer-Modell VM eine Puls-Zeit t1 und eine Pausen-Zeit t2 berechnet und daraufhin in einem dritten Zwischenschritt St2.3 das Redundanz-Signal SR erzeugt und an das Vorsteuerventil 16 ausgegeben.

Dadurch kann das Fahrzeug 200 in einem dritten Schritt St3 mit der vorgegebenen Fahrzeug-Soll-Verzögerung zSoll durch die Stotterbremsung SF in einen sicheren Zustand abgebremst werden.

In einem optionalen vierten Zwischenschritt St2.4 können die Puls-Zeit t1 und die Pausen-Zeit t2 durch Anpassung des Vorsteuer-Modells VM derartig geregelt werden, dass bei Durchführung der Stotterbremsung SF die Fahrzeug-Ist-Verzögerung zlst in etwa der vorgegebenen Fahrzeug-Soll-Verzögerung zSoll entspricht. Eine Abweichung kann beispielsweise dadurch auftreten, dass das Vorsteuer-Modell VM falsche Werte für die Fahrzeugmasse M oder einen falschen Anhängerzustand ZA annimmt. Weiterhin kann sich der erste Vorratsdruck pVA während der Durchführung der Stotterbremsung SF ändern, so dass sich auch der erste Betriebsbrems-Steuerdruck pA verändert.

### Bezugszeichenliste (Bestandteil der Beschreibung)

- 1, 2, 3, 4: Radbremse
- 5, 6, 7, 8: Räder
- 9: erster Achsmodulator
- 9a: erster pneumatischer Steuereingang
- 10: zweiter Achsmodulator
- 10a: zweiter pneumatischer Steuereingang
- 11: Fußbremsventil
- 11a: Entlüftungsanschluss
- 12, 13: ABS-Steuerventile
- 16: Vorsteuerventil
- 16a: erster Vorsteuer-Eingang
- 16b: zweiter Vorsteuer-Eingang
- 16c: Vorsteuer-Ausgang
- 16d: Vorsteuer-Steuereingang
- 16e: Vorsteuer-Entlüftung
- 16f: Magnetanker
- 16g, 16h: erste und zweite Wicklung um den Magnetanker 16f
- 17A, 17B: Steuerleitung für den jeweiligen Bremskreis A, B
- 20A: erster Druckmittelvorrat für Bremskreis A
- 20B: zweiter Druckmittelvorrat für Bremskreis B
- 22: Select-High-Ventil
- 50A: erste Energiequelle
- 50B: zweite Energiequelle
- 50C: Generator
- 50D: Kurzzeitspeicher
- 50E: Hochvoltspeicher

- 100a: elektropneumatisches Bremssystem
- 100b: rein pneumatisches Bremssystem
- 110: Betriebsbrems-Steuereinrichtung (ECU)
- 120: Assistenz-Steuereinrichtung (ADAS-ECU)
- 130: Redundanz-Steuereinrichtung (Bypass-ECU)
- 130a: Diodenschaltung
- 200: Fahrzeug

- A, B: Bremskreise
- C: Ventilcharakteristik
- D: Defekt
- p1, p2, p3, p4: Betriebsbrems-Bremsdruck
- p16: Vorsteuerdruck
- p16pwm: Vorsteuerdruck-Verlauf
- pA, pB: Betriebsbrems-Steuerdruck der jeweiligen Bremskreise A, B
- pAtm: Atmosphärendruck
- pF: Betätigungsdruck
- pGrenz: Grenz-Druck
- pHigh: niedriges Druckniveau
- pLow: hohes Druckniveau
- pVA, pVB: Vorratsdruck im jeweiligen Druckmittelvorrat 20A, 20B
- SA, SB: Steuersignal
- SD: Diagnose-Signal
- SF: Stotterbremsung
- SR: Redundanz-Signal
- t: Zeitpunkt
- t1: Puls-Zeit
- t2: Pausen-Zeit
- tGrenz: Grenz-Zeit
- VA, HA: Fahrzeugachsen
- vFzg: Fahrzeug-Geschwindigkeit
- VM: Vorsteuer-Modell
- Z1: erste Schaltstellung
- Z2: zweite Schaltstellung
- ZA: Anhängerzustand
- zSoll: Fahrzeug-Soll-Verzögerung
- zlst: Fahrzeug-Ist-Verzögerung

- St1, St2, St2.1, St2.2, St2.3, St2.4, St3: Schritte des Verfahrens

## Patentansprüche

1. Verfahren zum elektronischen Steuern eines pneumatischen Bremssystems (100a, 100b) in einem Fahrzeug (200), insbesondere Nutzfahrzeug, **gekennzeichnet durch** die folgenden Schritte:
- Feststellen, ob ein Ausfall oder ein Defekt (D) bei der elektronischen Ansteuerung (SA, SB) von Radbremsen (1, 2, 3, 4) des pneumatischen Bremssystems (100a, 100b) vorliegt (St1);
- Elektronisches Ansteuern eines Vorsteuerventils (16) über ein Redundanz-Signal (SR), falls ein Ausfall oder ein Defekt (D) bei der elektronischen Ansteuerung (SA, SB) festgestellt wurde, zum redundanten elektropneumatischen Betätigen der Radbremsen (1, 2, 3, 4) (St2);
wobei das Redundanz-Signal (SR) derartig vorgegeben wird, dass das Vorsteuerventil (16) abwechselnd für eine Puls-Zeit (t1) in eine zweite Schaltstellung (Z2) und für eine Pausen-Zeit (t2) in eine erste Schaltstellung (Z1) übergeht, wobei das Vorsteuerventil (16) in der ersten Schaltstellung (Z1) ein niedriges Druckniveau (pLow) und in der zweiten Schaltstellung (Z2) ein hohes Druckniveau (pHigh) als Vorsteuerdruck (p16) aussteuert, wobei die Radbremsen (1, 2, 3, 4) mit einem Betriebsbrems-Bremsdruck (p1, p2, p3, p4) angesteuert werden, der abhängig von dem Vorsteuerdruck (p16) ist,
wobei
die Puls-Zeit (t1) und die Pausen-Zeit (t2) derartig eingestellt werden, dass sich ein Vorsteuer-Druck (p16) ergibt, der einen Betriebsbrems-Bremsdruck (p1, p2, p3, p4) an den Radbremsen (1, 2, 3, 4) verursacht, der zumindest für eine Grenz-Zeit (tGrenz) wiederkehrend unter einen Grenzdruck (pGrenz) sinkt zum Bewirken einer Stotterbremsung (SF), wobei der Grenzdruck (pGrenz) und die Grenz-Zeit (tGrenz) dazu derartig gewählt werden, dass ein Wiederanlaufen eines zum Blockieren neigenden Rades (5, 6, 7, 8) lediglich durch die Vorgabe des Vorsteuerdruckes (p16) sichergestellt wird.

2. Verfahren nach Anspruch 1, **dadurch gekennzeichnet, dass** der Grenzdruck (pGrenz) und die Grenz-Zeit (tGrenz) derartig gewählt werden, dass ein Wiederanlaufen eines zum Blockieren neigenden Rades (5, 6, 7, 8) ausschließlich durch die Vorgabe des Vorsteuerdruckes (p16) sichergestellt wird.

3. Verfahren nach Anspruch 1 oder 2, **dadurch gekennzeichnet, dass** ein Wiederanlaufen eines blockierenden Rades (5, 6, 7, 8) durch den ausgesteuerten Vorsteuerdruck (p16) auch dann sichergestellt ist, wenn ABS-Steuerventile (12, 13) des Bremssystems (100a, 100b) ausgefallen sind.

4. Verfahren nach einem der Ansprüche 1 bis 3, **dadurch gekennzeichnet, dass** das niedrige Druckniveau (pLow) durch einen Betätigungsdruck (pF) von einem Fußbremsventil (11) vorgegeben wird oder von einem Atmosphärendruck (pAtm) von einer Vorsteuer-Entlüftung (11e).

5. Verfahren nach einem der vorhergehenden Ansprüche, **dadurch gekennzeichnet, dass** das hohe Druckniveau (pHigh) durch einen Druckmittelvorrat (20A, 20B), der Bremskreisen (A, B) des Fahrzeuges (200) zugeordnet sind, vorgegeben wird.

6. Verfahren nach einem der vorhergehenden Ansprüche, **dadurch gekennzeichnet, dass** die Puls-Zeit (t1) und die Pausen-Zeit (t2) aufgrund eines auf einer Redundanz-Steuereinrichtung (130) gespeicherten Vorsteuer-Modells (VM) berechnet werden,
wobei mit dem Vorsteuer-Modell (VM) aus einer durch die Redundanz-Steuereinrichtung (130) vorgegebenen Fahrzeug-Soll-Verzögerung (zSoll) ein auszusteuernder Vorsteuerdruck (p16) berechnet und in Abhängigkeit davon unter Berücksichtigung von Fahrzeug-Parametern (C, M, ZA), dem hohen Druckniveau (pHigh), dem niedrigen Druckniveau (pLow) sowie der Grenz-Zeit (tGrenz) und dem Grenz-Druck (pGrenz) die Puls-Zeit (t1) und die Pausen-Zeit (t2) zur Ansteuerung des Vorsteuerventils (16) über das Redundanz-Signal (SR) berechnet werden.

7. Verfahren nach Anspruch 6, **dadurch gekennzeichnet, dass** als Fahrzeug-Parameter eine Ventilcharakteristik (C) und/oder eine Fahrzeugmasse (M) und/oder ein Anhängerzustand (ZA) berücksichtigt werden.

8. Verfahren nach Anspruch 6 oder 7, **dadurch gekennzeichnet, dass** das Vorsteuer-Modell (VM) und/oder die Puls-Zeit (t1) und/oder die Pausen-Zeit (t2) während der Durchführung einer Stotterbremsung (SF) in Abhängigkeit davon angepasst wird, ob eine Fahrzeug-Ist-Verzögerung (zlst) mit der von der Redundanz-Steuereinrichtung (130) vorgegebenen Fahrzeug-Soll-Verzögerung (zSoll) übereinstimmt.

9. Verfahren nach einem der Ansprüche 6 bis 8, **dadurch gekennzeichnet, dass** das Vorsteuer-Modell (VM) und/oder die Puls-Zeit (t1) und/oder die Pausen-Zeit (t2) während der Durchführung einer Stotterbremsung (SF) in Abhängigkeit davon angepasst wird, ob sich während der Durchführung der Stotterbremsung (SF) das hohe Druckniveau (pHigh) und/oder das niedrige Druckniveau (pLow) und/oder die Fahrzeug-Parameter (C, M, ZA) verändern.

10. Verfahren nach einem der vorhergehenden Ansprüche, **dadurch gekennzeichnet, dass** der Grenz-Druck (pGrenz) 1 bar beträgt und die Grenz-Zeit (tGrenz) 0,25s.

11. Verfahren nach Anspruch 10, **dadurch gekennzeichnet, dass** die Puls-Zeit (t1) 0,1s und die Pausen-Zeit (t2) 0,2s oder die Puls-Zeit (t1) 0,3s und die Pausen-Zeit (t2) 0,45s ist zum Bewirken einer Stotterbremsung (SF).

12. Verfahren nach einem der vorhergehenden Ansprüche, **dadurch gekennzeichnet, dass** die Puls-Zeit (t1) und die Pausen-Zeit (t2) bzw. die Grenz-Zeit (tGrenz) und der Grenz-Druck (pGrenz) auf typische Fahrsituationen abgestimmt werden, wobei eine typische Fahrsituation bei Reibwerten (f) von mindestens 0,6 vorliegt.

13. Verfahren nach einem der vorhergehenden Ansprüche, **dadurch gekennzeichnet, dass** ein Ausfall oder ein Defekt (D) bei der elektronischen Ansteuerung (SA, SB) über ein Diagnose-Signal (SD) erkannt wird, das von einer die Radbremsen (1, 2, 3, 4) elektronisch steuernden Betriebsbrems-Steuereinrichtung (110) und/oder einer Assistenz-Steuereinrichtung (120) ausgegeben wird.

14. Verfahren nach einem der vorhergehenden Ansprüche, **dadurch gekennzeichnet, dass** das elektrische Ansteuern des Vorsteuerventils (16) mit dem Redundanz-Signal (SR) in einem ersten Bremskreis (A) an der Vorderachse (VA) und/oder in einem zweiten Bremskreis (A) an einer Hinterachse (HA) des Fahrzeuges (200) stattfindet.

15. Verfahren nach einem der vorhergehenden Ansprüche, **dadurch gekennzeichnet, dass** der Vorsteuerdruck (p16) einen Betriebsbrems-Steuerdruck (pA, pB) zur pneumatischen Ansteuerung einen Achsmodulator (9, 10) vorgibt oder direkt den Betriebsbrems-Bremsdruck (p1, p2, p3, p4) zur Ansteuerung der Radbremsen (1, 2, 3, 4).

16. Verfahren nach einem der vorhergehenden Ansprüche, **dadurch gekennzeichnet, dass** eine das Vorsteuerventil (16) bei einem Ausfall oder einem Defekt (D) bei der elektronischen Ansteuerung (SA, SB) der Radbremsen (1, 2, 3, 4) steuernde Redundanz-Steuereinrichtung (130) ergänzend oder alternativ zu einer ersten Energiequelle (50A) von einer zweiten Energiequelle (50B) und/oder von einem Generator (50C) und/oder von einem Kurzzeitspeicher (50D) und/oder von einem Hochvoltspeicher (50E) mit Energie versorgt wird.

17. Elektronisch steuerbares pneumatisches Bremssystem (100a, 100b) für ein Fahrzeug (200), insbesondere Nutzfahrzeug (200), ausgelegt zur Durchführung eines Verfahrens nach einem der vorhergehenden Ansprüche, wobei das Bremssystem ein EBS-Bremssystem (100a) oder ein rein pneumatisches Bremssystem (100b) ist.

18. Elektronisch steuerbares pneumatisches Bremssystem (100a, 100b) nach Anspruch 17, **dadurch gekennzeichnet, dass** das Vorsteuerventil (16) in einem der Vorderachse (VA) zugeordneten ersten Bremskreis (A) und/oder in einem der Hinterachse (HA) zugeordneten zweiten Bremskreis (B) angeordnet ist.

19. Elektronisch steuerbares pneumatisches Bremssystem (100a, 100b) nach Anspruch 17 oder 18, **dadurch gekennzeichnet, dass** das Vorsteuerventil (16) einen Vorsteuer-Steuereingang (16d) aufweist und der Vorsteuer-Steuereingang (16d) mit einer das Redundanz-Signal (SR) ausgebenden Redundanz-Steuereinrichtung (130) und/oder einer das Steuersignal (SA) ausgebenden Betriebsbrems-Steuereinrichtung (110) verbunden ist zum Ausgeben eines Vorsteuerdruckes (p16) in Abhängigkeit des Redundanz-Signals (SR) und/oder in Abhängigkeit des Steuersignals (SA).

20. Elektronisch steuerbares pneumatisches Bremssystem (100b) nach Anspruch 19, **dadurch gekennzeichnet, dass** der Vorsteuer-Steuereingang (16d) lediglich mit der Redundanz-Steuereinrichtung (130) verbunden ist und die Redundanz-Steuereinrichtung (130) mit der Betriebsbrems-Steuereinrichtung (110) verbunden ist zum Übertragen des Steuersignals (SA) von der Betriebsbrems-Steuereinrichtung (110) auf die Redundanz-Steuereinrichtung (130),
wobei die Redundanz-Steuereinrichtung (130) eine Diodenschaltung (130a) aufweist zum entkoppelten Ausgeben des Redundanz-Signals (SR) oder des Steuersignals (SA) an den Vorsteuer-Steuereingang (16d).

21. Elektronisch steuerbares pneumatisches Bremssystem (100b) nach Anspruch 19, **dadurch gekennzeichnet, dass** der Vorsteuer-Steuereingang (16d) mit der Redundanz-Steuereinrichtung (130) und der Betriebsbrems-Steuereinrichtung (110) verbunden ist,
wobei der Vorsteuer-Steuereingang (16d) einen doppelt umwickelten Magnetanker (16f) aufweist, wobei eine erste Wickelung (16g) mit der Redundanz-Steuereinrichtung (130) und eine zweite Wickelung (16h) mit der Betriebsbrems-Steuereinrichtung (110) derartig in elektrischer Wirkverbindung steht, dass der Magnetanker (16f) in Abhängigkeit des Redundanz-Signals (SR) oder in Abhängigkeit des Steuersignals (SA) bewegt wird zum Umschalten des Vorsteuerventils (16) in die zweite Schaltstellung (Z2).

22. Fahrzeug (200), insbesondere Nutzfahrzeug, mit einem elektronisch gesteuerten pneumatischen Bremssystem (100a, 100b) nach einem der Ansprüche 17 bis 21, ausgelegt zur Durchführung eines Verfahrens nach einem der Ansprüche 1 bis 16.

## Claims

1. Method for electronically controlling a pneumatic brake system (100a, 100b) in a vehicle (200), in particular a commercial vehicle, **characterized by** the following steps:
- determining whether a failure or a defect (D) occurs in the electronic actuation (SA, SB) of wheel brakes (1, 2, 3, 4) of the pneumatic brake system (100a, 100b) (St1);
- electronically actuating a pilot valve (16) via a redundancy signal (SR) in the event of a failure or a defect (D) being determined in the electronic actuation (SA, SB) so as to actuate the wheel brakes (1, 2, 3, 4) in a redundant electropneumatic manner (St2);
wherein the redundancy signal (SR) is specified in such a manner that the pilot valve (16) alternately transfers for a pulse time (t1) into a second switch position (Z2) and for a pause time (t2) into a first switch position (Z1), wherein the pilot valve (16) outputs a low pressure level (pLow) in the first switch position (Z1) and a high pressure level (pHigh) in the second switch position (Z2) as the pilot pressure (p16), wherein the wheel brakes (1, 2, 3, 4) are actuated using a service brake braking pressure (p1, p2, p3, p4) that is dependent upon the pilot pressure (p16), wherein
the pulse time (t1) and the pause time (t2) are set in such a manner that a pilot pressure (p16) occurs that initiates a service brake braking pressure (p1, p2, p3, p4) at the wheel brakes (1, 2, 3, 4), said service brake braking pressure recurrently dropping at least for a limit time (tGrenz) below a limit pressure (pGrenz) so as to initiate an intermittent braking procedure (SF), wherein the limit pressure (pGrenz) and the limit time (tGrenz) are selected for this purpose in such a manner that it is only ensured that a wheel (5, 6, 7, 8) that tends to lock rotates again by means of specifying the pilot pressure (p16).

2. Method according to Claim 1, **characterized in that** the limit pressure (pGrenz) and the limit time (tGrenz) are selected in such a manner that it is exclusively ensured that a wheel (5, 6, 7, 8) that tends to lock rotates again by means of specifying the pilot pressure (p16).

3. Method according to Claim 1 or 2, **characterized in that** it is then also ensured that a locked wheel (5, 6, 7, 8) rotates again by means of the pilot pressure (p16) that is output if ABS control valves (12, 13) of the brake system (100a, 100b) have failed.

4. Method according to any one of Claims 1 to 3, **characterized in that** the low pressure level (pLow) is specified by means of an actuating pressure (pF) from a foot brake valve (11) or by an atmospheric pressure (pAtm) of a pilot venting duct (11e).

5. Method according to any one of the preceding claims, **characterized in that** the high pressure level (pHigh) is specified by means of a pressure medium reservoir (20A, 20B) to which braking circuits (A, B) of the vehicle (200) are allocated.

6. Method according to any one of the preceding claims, **characterized in that** the pulse time (t1) and the pause time (t2) are calculated on the basis of a pilot model (VM) that is stored on a redundancy control unit (130),
wherein a pilot pressure (p16) that is to be output is calculated using the pilot model (VM) from a vehicle desired deceleration (zSoll) that is specified by means of the redundancy control unit (130) and in dependence upon said pilot pressure the pulse time (t1) and the pause time (t2) for actuating the pilot valve (16) via the redundancy signal (SR) are calculated taking into account vehicle parameters (C, M, ZA), the high pressure level (pHigh), the low pressure level (pLow) and also the limit time (tGrenz) and the limit pressure (pGrenz).

7. Method according to Claim 6, **characterized in that** a valve characteristic (C) and/or a vehicle mass (M) and/or a trailer state (ZA) are taken into account as vehicle parameters.

8. Method according to Claim 6 or 7, **characterized in that** the pilot model (VM) and/or the pulse time (t1) and/or the pause time (t2) whilst implementing an intermittent braking procedure (SF) is adjusted in dependence upon whether a vehicle actual deceleration (zlst) corresponds to the vehicle desired deceleration (zSoll) that is specified by the redundancy control unit (130).

9. Method according to any one of Claims 6 to 8, **characterized in that** the pilot model (VM) and/or the pulse time (t1) and/or the pause time (t2) whilst implementing an intermittent braking procedure (SF) is/are adjusted in dependence upon whether the high pressure level (pHigh) and/or the low pressure level (pLow) and/or the vehicle parameters (C, M, ZA) change whilst implementing the intermittent braking procedure (SF).

10. Method according to any one of the preceding claims, **characterized in that** the limit pressure (pGrenz) amounts to 1 bar and the limit time (tGrenz) amounts to 0.25s.

11. Method according to Claim 10, **characterized in that** in order to initiate an intermittent braking procedure (SF) the pulse time (t1) is 0.1s and the pause time (t2) is 0.2s or the pulse time (t1) is 0.3s and the pause time (t2) is 0.45s.

12. Method according to any one of the preceding claims, **characterized in that** the pulse time (t1) and the pause time (t2) or the limit time (tGrenz) and the limit pressure (pGrenz) are coordinated to typical driving situations, wherein a typical driving situation occurs in the case of frictional values (f) of at least 0.6.

13. Method according to any one of the preceding claims, **characterized in that** a failure or a defect (D) in the electronic actuation (SA, SB) is identified via a diagnostic signal (SD) that is output by a service brake control unit (110) that controls the wheel brakes (1, 2, 3, 4) electronically and/or by an assistance control unit (120).

14. Method according to any one of the preceding claims, **characterized in that** the electrical actuation of the pilot valve (16) is performed using the redundancy signal (SR) in a first braking circuit (A) at the front axle (VA) and/or in a second braking circuit (A) at a rear axle (HA) of the vehicle (200).

15. Method according to any one of the preceding claims, **characterized in that** the pilot pressure (p16) specifies a service brake control pressure (pA, pB) for pneumatically actuating an axle modulator (9, 10) or directly specifies the service brake braking pressure (p1, p2, p3, p4) for actuating the wheel brakes (1, 2, 3, 4).

16. Method according to any one of the preceding claims, **characterized in that** a redundancy control unit (130) that controls the pilot valve (16) in the event of a failure or a defect (D) in the electronic actuation (SA, SB) of the wheel brakes (1, 2, 3, 4) is supplied with energy by a second energy source (50B) and/or by a generator (50C) and/or by a short-term storage device (50D) and/or by a high voltage storage device (50E) in addition to or as an alternative to a first energy source (50A) .

17. Electronically controllable pneumatic brake system (100a, 100b) for a vehicle (200), in particular a commercial vehicle (200), designed for implementing a method according to any one of the preceding claims, wherein the brake system is an EBS brake system (100a) or a purely pneumatic brake system (100b).

18. Electronically controllable pneumatic brake system (100a, 100b) according to Claim 17, **characterized in that** the pilot valve (16) is arranged in a first braking circuit (A) that is allocated to the front axle (VA) and/or in a second braking circuit (B) that is allocated to the rear axle (HA).

19. Electronically controllable pneumatic brake system (100a, 100b) according to Claim 17 or 18, **characterized in that** the pilot valve (16) comprises a pilot control input (16d) and the pilot control input (16d) is connected to a redundancy control unit (130) that outputs the redundancy signal (SR) and/or to a service brake control unit (110) that outputs the control signal (SA) so as to output a pilot pressure (p16) in dependence upon the redundancy signal (SR) and/or in dependence upon the control signal (SA).

20. Electronically controllable pneumatic brake system (100b) according to Claim 19, **characterized in that** the pilot control input (16d) is only connected to the redundancy control unit (130) and the redundancy control unit (130) is connected to the service brake control unit (110) so as to transmit the control signal (SA) from the service brake control unit (110) to the redundancy control unit (130),
wherein the redundancy control unit (130) comprises a diode circuit (130a) for outputting the redundancy signal (SR) or the control signal (SA) to the pilot control input (16d) in a decoupled manner.

21. Electronically controllable pneumatic brake system (100b) according to Claim 19, **characterized in that** the pilot control input (16d) is connected to the redundancy control unit (130) and the service brake control unit (110),
wherein the pilot control input (16d) comprises a double-wound solenoid armature (16f), wherein a first winding (16g) is electrically operatively connected to the redundancy control unit (130) and a second winding (16h) is electrically operatively connected to the service brake control unit (110) in such a manner that the solenoid armature (16f) is moved in dependence upon the redundancy signal (SR) or in dependence upon the control signal (SA) in order to switch the pilot valve (16) into the second switch position (Z2) .

22. Vehicle (200), in particular commercial vehicle, having an electronically controlled pneumatic brake system (100a, 100b) according to any one of Claims 17 to 21, designed for implementing a method according to any one of Claims 1 to 16.

## Revendications

1. Procédé de commande électronique d'un système de freinage pneumatique (100a, 100b) dans un véhicule (200), en particulier un véhicule utilitaire, **caractérisé par** les étapes suivantes :
- déterminer la présence éventuelle d'une défaillance ou d'un défaut (D) dans la commande électronique (SA, SB) de freins de roue (1, 2, 3, 4) du système de freinage pneumatique (100a, 100b) (St1) ;
- commander électroniquement une vanne pilote (16) par le biais d'un signal de redondance (SR), dans le cas où une défaillance ou un défaut (D) a été trouvé(e) dans la commande électronique (SA, SB), pour actionner les freins de roue (1, 2, 3, 4) par des moyens électropneumatiques redondants (St2) ; le signal de redondance (SR) étant spécifié de manière à faire passer la vanne pilote (16) alternativement pendant un temps d'impulsion (t1) dans une deuxième position de commutation (Z2) et pendant un temps de pause (t2) dans une première position de commutation (Z1), la vanne pilote (16) commandant un niveau de basse pression (pBas) dans la première position de commutation (Z1) et un niveau de haute pression (pHaut) en tant que pression pilote (p16) dans la deuxième position de commutation (Z2), les freins de roue (1, 2, 3, 4) étant commandés avec une pression de frein de service (p1, p2, p3, p4) qui dépend de la pression pilote (p16), le temps d'impulsion (t1) et le temps de pause (t2) étant réglés de façon à obtenir une pression pilote (p16) qui produit une pression de frein de service (p1, p2, p3, p4) sur les freins de roue (1, 2, 3, 4) qui descend à plusieurs reprises au-dessous d'une pression limite (pLimite) pendant au moins un temps limite (tLimite) pour provoquer un freinage saccadé (SF), la pression limite (pLimite) et le temps limite (tLimite) étant choisis de façon à assurer un redémarrage d'une roue (5, 6, 7, 8), tendant à se bloquer, seulement par spécification de la pression pilote (p16).

2. Procédé selon la revendication 1, **caractérisé en ce que** la pression limite (pLimite) et le temps limite (tLimite) sont choisis de façon à assurer un redémarrage d'une roue (5, 6, 7, 8), tendant à se bloquer, exclusivement par spécification de la pression pilote (p16).

3. Procédé selon la revendication 1 ou 2, **caractérisé en ce qu'**un redémarrage d'une roue (5, 6, 7, 8), tendant à se bloquer, est assuré par la pression pilote commandée (p16) même si des soupapes de commande ABS (12, 13) du système de freinage (100a, 100b) sont défaillantes.

4. Procédé selon l'une des revendications 1 à 3, **caractérisé en ce que** le niveau de basse pression (pBas) est spécifié par une pression de fonctionnement (pF) d'une soupape de frein à pied (11) ou d'une pression atmosphérique (pAtm) d'une purge pilote (11e).

5. Procédé selon l'une des revendications précédentes, **caractérisé en ce que** le niveau de haute pression (pHaut) est spécifié par une alimentation en fluide sous pression (20A, 20B) qui est associée à des circuits de freinage (A, B) du véhicule (200).

6. Procédé selon l'une des revendications précédentes, **caractérisé en ce que** le temps d'impulsion (t1) et le temps de pause (t2) sont calculés sur la base d'un modèle pilote (VM) mémorisé sur un dispositif de commande de redondance (130), le modèle pilote (VM) étant utilisé pour calculer une pression pilote (p16) à commande à partir d'une décélération de consigne de véhicule (zConsigne) spécifiée par le dispositif de commande de redondance (130) et, en fonction de la pression pilote, le temps d'impulsion (t1) et le temps de pause (t2) étant calculés avec prise en compte de paramètres de véhicule (C, M, ZA), du niveau de haute pression (pHaut), du niveau de basse pression (pBas) ainsi que du temps limite (tLimite) et de la pression limite (pLimite) pour commander la vanne pilote (16) par le biais du signal de redondance (SR).

7. Procédé selon la revendication 6, **caractérisé en ce qu'**une caractéristique de soupape (C) et/ou une masse de véhicule (M) et/ou un état de remorque (ZA) sont pris en compte comme paramètres de véhicule.

8. Procédé selon la revendication 6 ou 7, **caractérisé en ce que** le modèle pilote (VM) et/ou le temps d'impulsion (t1) et/ou le temps de pause (t2) sont ajustés lors de la réalisation d'un freinage saccadé (SF) selon qu'une décélération réelle de véhicule (zRéel) corresponde à la décélération de consigne de véhicule (zConsigne) spécifiée par le dispositif de commande de redondance (130).

9. Procédé selon l'une des revendications 6 à 8, **caractérisé en ce que** le modèle pilote (VM) et/ou le temps d'impulsion (t1) et/ou le temps de pause (t2) sont spécifiés lors de la réalisation d'un freinage saccadé (SF) selon que le niveau de haute pression (pHaut) et/ou le niveau de basse pression (pBas) et/ou les paramètres de véhicule (C, M, ZA) changent pendant le freinage saccadé (SF) .

10. Procédé selon l'une des revendications précédentes, **caractérisé en ce que** la pression limite (pLimite) est de 1 bar et le temps limite (tLimite) est 0,25 s.

11. Procédé selon la revendication 10, **caractérisé en ce que** le temps d'impulsion (t1) est de 0,1 s et le temps de pause (t2) est de 0,2 s ou le temps d'impulsion (t1) est de 0,3 s et le temps de pause (t2) est de 0,45 s pour provoquer le freinage saccadé (SF).

12. Procédé selon l'une des revendications précédentes, **caractérisé en ce que** le temps d'impulsion (t1) et le temps de pause (t2) ou le temps limite (tLimite) et la pression limite (pLimite) sont adaptés à des situations de roulement typiques, une situation de roulement typique étant présente à des valeurs de frottement (f) d'au moins 0,6.

13. Procédé selon l'une des revendications précédentes, **caractérisé en ce qu'**une défaillance ou un défaut (D) de la commande électronique (SA, SB) est détecté par le biais d'un signal de diagnostic (SD) qui est délivré par un dispositif de commande de frein de service (110) commandant électroniquement les freins de roue (1, 2, 3, 4) et/ou un dispositif de commande d'assistance (120).

14. Procédé selon l'une des revendications précédentes, **caractérisé en ce que** la commande électrique de la vanne pilote (16) est effectuée avec le signal de redondance (SR) dans un premier circuit de freinage (A) sur l'essieu avant (VA) et/ou dans un deuxième circuit de freinage (A) sur un essieu arrière (HA) du véhicule (200).

15. Procédé selon l'une des revendications précédentes, **caractérisé en ce que** la pression pilote (p16) spécifie une pression de commande de frein de service (pA, pB) destinée à commander pneumatiquement un modulateur d'essieu (9, 10) ou directement la pression de frein de service (p1, p2, p3, p4) destinée à commander les freins des roues (1, 2, 3, 4).

16. Procédé selon l'une des revendications précédentes, **caractérisé en ce que**, en cas de défaillance ou de défaut (D) de la commande électronique (SA, SB) du dispositif de commande de redondance (130) commandant des freins de roue (1, 2, 3, 4), la vanne pilote (16) est alimentée en énergie, en complément ou en variante d'une première source d'énergie (50A), par une deuxième source d'énergie (50B) et/ou un générateur (50C) et/ou un accumulateur à temps court (50D) et/ou un accumulateur à haute tension (50E) .

17. Système de freinage pneumatique à commande électronique (100a, 100b) destiné à un véhicule (200), notamment un véhicule utilitaire (200), pour mettre en œuvre un procédé selon l'une des revendications précédentes, le système de freinage étant un système de freinage EBS (100a) ou un système de freinage purement pneumatique (100b).

18. Système de freinage pneumatique à commande électronique (100a, 100b) selon la revendication 17, **caractérisé en ce que** la soupape pilote (16) est disposée dans un premier circuit de freinage (A) associé à l'essieu avant (VA) et/ou dans un deuxième circuit de freinage associé à l'essieu arrière (HA) (B) .

19. Système de freinage pneumatique à commande électronique (100a, 100b) selon la revendication 17 ou 18, **caractérisé en ce que** la vanne pilote (16) comporte une entrée de commande pilote (16d) et l'entrée de commande pilote (16d) est reliée à un dispositif de commande de redondance (130) délivrant le signal de redondance (SR) et/ou à un dispositif de commande de frein de service (110) délivrant le signal de commande (SA) pour produire une pression pilote (p16) en fonction du signal de redondance (SR) et/ou en fonction du signal de commande (SA).

20. Système de freinage pneumatique à commande électronique (100b) selon la revendication 19, **caractérisé en ce que** l'entrée de commande pilote (16d) est reliée uniquement au dispositif de commande de redondance (130) et le dispositif de commande de redondance (130) est relié au dispositif de commande de frein de service (110) pour transmettre le signal de commande (SA) du dispositif de commande de frein de service (110) au dispositif de commande de redondance (130), le dispositif de commande de redondance (130) comportant un circuit de diode (130a) destiné à délivrer en sortie de manière découplée le signal de redondance (SR) ou le signal de commande (SA) à l'entrée de commande pilote (16d).

21. Système de freinage pneumatique à commande électronique (100b) selon la revendication 19, **caractérisé en ce que** l'entrée de commande pilote (16d) est reliée au dispositif de commande de redondance (130) et au dispositif de commande de frein de service (110), l'entrée de commande pilote (16d) comportant un induit magnétique à double enroulement (16f), un premier enroulement (16g) étant relié électriquement au dispositif de commande de redondance (130) et un deuxième enroulement (16h) étant relié électriquement au dispositif de commande de frein de service (110) de telle sorte que l'induit magnétique (16f) soit déplacé en fonction du signal de redondance (SR) ou en fonction du signal de commande (SA) pour commuter la vanne pilote (16) dans la deuxième position de commutation (Z2) .

22. Véhicule (200), notamment véhicule utilitaire, comprenant un système de freinage pneumatique à commande électronique (100a, 100b) selon l'une des revendications 17 à 21 destiné à mettre en œuvre un procédé selon l'une des revendications 1 à 16.
